Europäisches Patentamt

European Patent Office

Office européen des brevets

(19)

(11) Publication number: **0 280 792 B1**

(12) **EUROPEAN PATENT SPECIFICATION**

(45) Date of publication of patent specification: **20.05.92** (51) Int. Cl.5: **A01D 57/04**

(21) Application number: **87200367.8**

(22) Date of filing: **02.03.87**

(54) **Header for agricultural machine including fore-and-aft adjustable reel.**

(43) Date of publication of application:
**07.09.88 Bulletin 88/36**

(45) Publication of the grant of the patent:
**20.05.92 Bulletin 92/21**

(84) Designated Contracting States:
**DE ES FR GB IT**

(56) References cited:
**FR-A- 1 036 717**      **FR-A- 1 404 777**
**FR-A- 2 011 757**      **FR-A- 2 315 840**
**GB-A- 775 490**        **GB-A- 838 601**
**SU-A- 886 820**

**SOVIET INVENTIONS ILLUSTRATED, section P, week 8434, 3rd October 1984, no. 84-212201/34, Derwent Publications Ltd., London, GB; & SU-A-1 063 315 (OMSK AGRIC INST) 30-12-1983**

(73) Proprietor: **FORD NEW HOLLAND N.V.**
**Leon Claeysstraat 3a**
**B-8210 Zedelgem(BE)**

(72) Inventor: **Decoene, Frans Joseph Gerard Cornelius**
**Ruddervoordestraat 19**
**B-8210 Zedelgem(BE)**

(74) Representative: **Vandenbroucke, Alberic T.J.**
**FORD NEW HOLLAND N.V. Leon Claeysstraat 3A**
**B-8210 Zedelgem(BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

This invention relates to headers for agricultural machines and, although it will be discussed primarily in conjunction with combine harvesters, it is to be understood that it is applicable to other agricultural machines as well. The invention more specifically is concerned with reels provided on such headers.

Conventionally, a header for an agricultural machine comprises a cutterbar operable to cut standing crop, an auger which receives cut crop material and normally feeds it to a central opening through which it passes to be processed by the machine to which the header is fitted, and a rotatable reel mounted generally above the cutterbar and operable to sweep standing crop towards the cutterbar and then to transport the cut crop material over the cutterbar to the auger. The reel normally comprises a plurality of tine bars (typically six) from which extend tines along the length thereof; the tine bars being mounted on the ends of spider arms spaced along the reel for rotation about the main axis of the reel. If no other mechanism were employed, the tines of each tine bar would undergo one revolution for each revolution of the reel but this is unacceptable because, to date, the tines have been required to maintain a constant orientation as the reel rotates, primarily to prevent the tines carrying cut crop material over the reel as opposed to disengaging or withdrawing from the cut crop material as the latter reaches the vicinity of the auger.

To this end, the tine bars have been made rotatable about their respective own axes on the reel and have been connected at their ends by respective crank arms to second spiders which are held offset from the first spiders. In operation, the reel including the first spiders is driven about the main axis which in turn drives the second spiders around an offset axis through the intermediary of the crank arms and in a manner so that the tine bars are rotated about their respective own axes in a direction opposite to that of the reel and by an equal amount, whereby the tines are maintained in a given orientation which is set by adjusting the position of the offset axis of the second spiders relative to the main axis of the reel.

With this conventional arrangement, the tips of the tines describe a circular path which can be positioned relative to the cutterbar by adjusting (usually by hydraulic cylinders) the reel in both a generally vertical direction and in a generally horizontal direction. Ideally, the tine path lies closely adjacent and above the cutterbar on the one hand and closely adjacent the forward edge of the auger on the other hand. However, this positioning may be adversely affected if the reel is moved forwardly and downwardly which may become necessary in order to let the tines pick up down crop, i.e. crop which is no longer standing upright due to inclement weather. In an attempt to overcome this problem, FR-A-2.315.840 proposes a header reel wherein the angular position of the reel tines with respect to the horizontal is adjustable without affecting the relative position of the locus of the free ends of these reel tines with respect to the cutterbar and the header auger. This is accomplished by mounting the reel on the fore-and-aft adjustable reel adjustment members on the reel arms via the intermediary of additional pivot arms of which the pivot axis coincides with the geometrical center of said circular locus.

In SU-A-1063315 there is disclosed a reel for a combine harvester which basically is of the same type as described above but which includes a modification whereby the second or offset spiders are moved by a crank mechanism so as to vary the tine orientation during reel rotation with a view to minimizing crop losses due to flattened or down crop not being lifted by the tines for cutting by the cutterbar. Thus this modification concentrates on the problem of harvesting down crop and does not address the related problems of optimum spacing between reel and cutterbar, and transporting cut crop to the auger.

Accordingly, the object of the present invention is to provide a header including a reel for an agricultural machine and of which the reel has an optimal tine orientation and of which the tine path is adjustable in an optimal position from the standpoints of crop engagement prior to cutting, reel/cutterbar spacing, and crop transportation to the auger after cutting.

According to the invention there is provided a header for an agricultural machine comprising :
- a header frame
- a cutterbar attached to the header frame and operable to cut standing crop;
- a rotatable reel having a transverse shaft defining the rotational main axis thereof and including a plurality of crop-engaging members rotatably mounted thereon about respective further axes disposed around the main shaft;
- first drive means for rotatably driving the reel in one direction;
- inclination control means including steering means and being operable, during rotation of the reel in said one direction, to rotate the crop-engaging members around the respective further axes in the opposite direction; the arrangement being such that, if the steering means were to be held in a fixed position, the crop-engaging members would be maintained in a fixed orientation relative to the horizontal whereby the free ends of the crop-engaging members would define a circularly shaped locus;

- further drive means associated with the steering means for oscillating said steering means during rotation of the reel whereby the crop-engaging members equally are oscillated back-and-forth around their respective further pivot axes on the reel and the locus of the free ends of said crop-engaging members deviates from said circular shape; and
- generally fore-and-aft extending reel supporting members at the transversely opposite ends of the reel for supporting the reel on the header; said reel supporting members being adjustably mounted on the header frame so as to permit generally vertical adjustment of the reel relative to the cutterbar;

and which is characterized in that :

the reel is mounted on the reel supporting members through the intermediary of reel adjustment members which, on the one hand, are adjustable relative to the reel supporting members in the generally fore-and-aft direction so as to permit adjustment of the non-circular locus of the free ends of the crop-engaging members relative to the cutterbar in said generally fore- and-aft direction and, on the other hand, also are angularly adjustable relative to said reel supporting members around a pivot axis generally at or proximate to the main axis of the reel so as to additionally permit angular adjustment of said non-circular locus relative to said cutterbar.

The aforementioned oscillation of the steering means by the further drive means enables the crop-engaging members to be oriented and displaced so as to fulfil the required three primary functions without the fulfilment of any one of these requirements detracting from the fulfilment of any other, namely :

- the lifting of any down crop;
- the supporting of the engaged crop close to the cutterbar for cutting; and
- the transporting of the cut crop from the cutterbar to the auger and the disengaging of the crop immediately adjacent the auger.

A significant feature of this aspect of the present invention is that the transition between the two generally linear second and third portions of the locus of the outer ends of the crop-engaging members extends into what is normally a dead space between the cutterbar and the auger where cut crop material tends to collect. Thus this dead space is constantly cleared, at least to a greater extent than normal, with the present invention.

Preferably, the portions of the reel supporting members upon which the reel adjustment members are mounted for generally fore-and-aft adjustment, are inclined downwardly as seen in the forward direction whereby said locus of the free ends of the crop-engaging members is lowered, respectively raised relative to the cutterbar when said reel adjustment members are adjusted in the generally forward direction, respectively the generally rearward direction relative to the reel supporting members.

Furthermore, means may be provided for effecting said generally fore-and- aft and angular adjustments of the reel adjustment members simultaneously so that, when the locus of the free ends of the crop-engaging members is shifted relative to the cutterbar in the generally fore-and-aft direction, the angular position of said locus relative to said cutterbar is varied at the same time. These means preferably comprise : a) guide means for guiding each said reel adjustment member along a predetermined path relative to the corresponding reel supporting member and determined by said combined generally fore-and-aft and angular adjustment; and b) position control means operatively associated with said reel adjustment members for effecting movement of said members along said paths.

Headers for agricultural machines in accordance with the invention will now be described in greater detail by way of example with reference to the accompanying drawings, in which :

Figure 1 is a schematic side view of a header with portions broken away for the sake of clarity; said header being adapted for use in combination with an agricultural machine such as a combine harvester,

Figure 2 is a detail, to a larger scale, of Figure 1,

Figure 3 is a detail, to a larger scale, of Figure 2 with components in different relative positions,

Figure 4 is a section on the line IV-IV of Figure 3,

Figure 5 is a partial view in the direction of arrow V in Figure 1, with some components shown in section,

Figure 6 is a view similar to that of Figure 1 but showing some components in different relative positions,

Figures 7 and 8 are partial schematical views of Figure 1 showing two different variations in orientation of the crop-engaging members in relation to the cutterbar and auger of the header,

Figure 9 is a view similar to Figure 1 but showing a second embodiment of the header, and

Figure 10 is a view similar to that of Figure 9 but showing some of the components of the second embodiment in different relative positions.

The terms "forward", "rearward", "fore-and-aft", "transverse", "left", "right", etc. used in connection with the combine harvester and/or components thereof, are determined with reference to the direction of forward operative travel of the combine harvester but should not be considered as limiting.

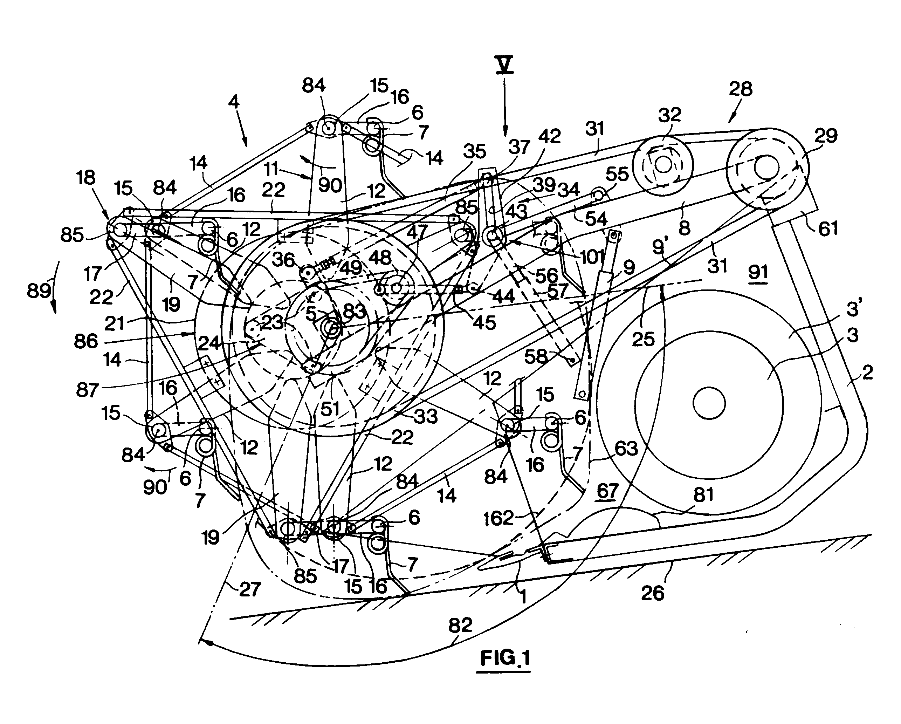

Referring first primarily to Figures 1 to 5, the header shown therein typically may be employed on a combine harvester (not shown) and comprises a cutterbar 1 which is mounted on a header frame 2, the latter further also supporting an auger 3 having oppositely directed flights 3' at respective ends for feeding cut crop material to a central outlet (not shown) in the header through which the crop material passes for processing by the combine harvester.

The cutterbar 1 conventionally is mounted at a distance forwardly of the auger 3. A header floor 81 shaped in a particular manner as is conventional, extends rearwardly from the cutterbar 1 and beneath the auger 3. The header floor 81 and the auger 3 define a generally triangularly shaped crop transfer zone 67 therebetween.

The header further comprises a reel 4 mounted for rotation about the axis 83 of a main shaft 5 (comprising a tube carrying a stub shaft at each end) and which includes six crop-engaging members in the form of tine bars 6, equispaced around the main shaft 5 and each having a plurality of spring tines 7 extending therealong. The reel 4 is mounted between the generally forward ends of two arms 8, the rearward ends of which are pivotally attached to the header frame 2 and which can be raised and lowered, together with the reel 4, by respective hydraulic cylinders 9.

The main shaft 5 carries at each end a spider 11 having six radial arms 12 equispaced around, and connected at one end to, a ring 13 which itself rigidly is attached to said main shaft 5. The radial arms 12 are interconnected at their other ends by chord arms 14. A plurality of intermediate spiders (not shown) of similar form as the end spiders 11 also are provided. The radial arms 12 of each spider 11 rotatably carry at their outer ends stub shafts 15. Crank arms 16 are connected at one end to the inwardly facing ends of the stub shafts 15 associated with the outer spiders 11 and to the respective opposite ends of the stub shafts 15 associated with the intermediate spiders. The other ends of corresponding adjacent crank arms 16 are interconnected by tine bar sections 6 in a manner so as to define the aforementioned six crop-engaging members 6, 7 which extend across the full width of the reel 4 at equiangular intervals around the circumference of said reel 4 and in offset relationship relative to the outer ends of the spider arms 12. Said crop-engaging members 6, 7 thus are mounted on the outer ends of the spider arms 12 for rotational movement around the axes 84 defined by the stub shafts 15.

Alternate crop-engaging members 6, 7, each comprising a plurality of tine bar sections 6, have a further crank arm 17 coupled to the outwardly facing ends of the associated stub shafts 15 rotatably mounted on one end spider 11. The other crop-engaging members 6, 7 have a similar further crank arm 17 coupled to the outwardly facing ends of the associated stub shafts 15 rotatably mounted on the opposite end spider 11. Thus three further crank arms 17 are associated with each spider 11.

Inclination control means 86 for the crop-engaging members 6, 7 are provided which include a.o. an eccentric spider 18 associated with each one of the outer spiders 11. Each eccentric spider 18 comprises three radial arms 19 which are equispaced around a flanged ring 21 which itself is mounted concentrically with each eccentric spider 18; the axis of rotation of which is offset from that of the main shaft 5. The eccentric spider radial arms 19 are interconnected at their outer ends by chord arms 22 and further also rotatably receive further stub shafts 85 connected to the free ends of corresponding further crank arms 17. Thus the crop-engaging members 6, 7 are split into two sets of three members which are associated with respective eccentric spiders 18.

The inclination control means 86 further also comprise, at each transverse end of the reel 4, a steering means 87 in the form of a set of three rollers 23 mounted on a generally triangular plate 24 which itself is mounted for oscillating movement around the main axis 83 at a point offset from its center, whereby the plate 24 acts as a crank arm. The interior of each flanged ring 21 is arranged to be supported on the three rollers 23 of the associated plate 24.

Only one eccentric spider 18 and associated steering means 87 in the form of said plate 24 with the three rollers 23 thereon, is shown in the Figures 1, 2 and 5. However, as already said, two eccentric spiders 18 and associated steering means 87 are provided with the two steering means 87 being angularly offset from each other, when seen in side view of the header and relative to the main axis 83, so that successive crop-engaging members 6, 7 are presented in the correct manner, as will be described, over their operative arc of operation 82 relative to the cutterbar 1 and the auger 3. By the operative arc 82 of the tine bars 6 is meant the arc over which the tine bars 6 are moved when the associated tines 7 generally commence engaging crop material close to the ground 26 until said tines 7 finally generally disengage cut crop material as will be described in greater detail hereinafter. In as much as each eccentric spider 18 controls the position of only three crop-engaging members 6, 7, the latter are spaced 120° apart and this basically corresponds to the angular dimension of the operative arc 82 of the crop-engaging members 6, 7. This operative arc 82 is shown in Figures 1, 7 and 8 by a line 25 extending from the axis 83 of the main shaft 5 toward the auger 3 and being generally parallel to the ground line 26, and a line 27 which is spaced 120° back from the line 25. When the stub shafts 15 of one crop-engaging member 6, 7 coincide with the line 25, then the stub shafts 15 of another crop-engaging member 6, 7 of the same set of crop-engaging members 6, 7 coincide with the line 27. The portion of the locus 63 of the free ends of the tines 7 which corresponds with this operative arc 82 further will be referenced hereinafter with the reference 88. It will be appreciated that this operative section 88 of the locus 63 and the operative arc of operation 82 of the crop-engaging members 6, 7 are offset relative to each other to the extent that the free ends of the tines 7 are spaced at a distance from the corresponding stub shafts 15.

The reel 4 is driven in the direction 89 by first drive means 28 comprising a drive pulley 29 (which itself is driven from the combine harvester), a belt 31 extending from the drive pulley 29 over an idler pulley 32 to a pulley 33 mounted concentrically on the main shaft 5, and back to the pulley 29. On rotation of the drive pulley 29, the main shaft 5 is rotated by the pulley 33 and thus the spiders 11 (and intermediate spiders) and hence also the crop-engaging members 6, 7 equally are rotated in said direction 89 around the main axis 83 of the reel 4. However, in view of the presence of the crank plates 24 with the rollers 23 thereon and the eccentric spiders 18 (which together form the inclination control means 86), the crop-engaging members 6, 7 are caused to rotate, during said rotation of the reel 4 around the main axis 83 in the direction 89, by an equal angular displacement in the opposite direction 90 around the respective further axes 84 of the stub shafts 15 whereby the tine bars 6, and hence the tines 7 carried thereby, are maintained in a resultant nominal fixed orientation. The locus of the outer tips of the tines 7 under these operating conditions is a circle. This basic operation of the reel 4 is conventional.

However, during operation and provided the reel 4 is in an operative position close to the cutterbar 1, the angular position of the steering means 87 is varied continuously by further drive means 34 associated therewith. These further drive means 34 are split into two identical drives, one for each eccentric spider 18. Essentially, the further drive means 34 cause the steering means 87 to oscillate to advance and retard the tine bars 6 so as to alter the nominal fixed orientation of the tines 7.

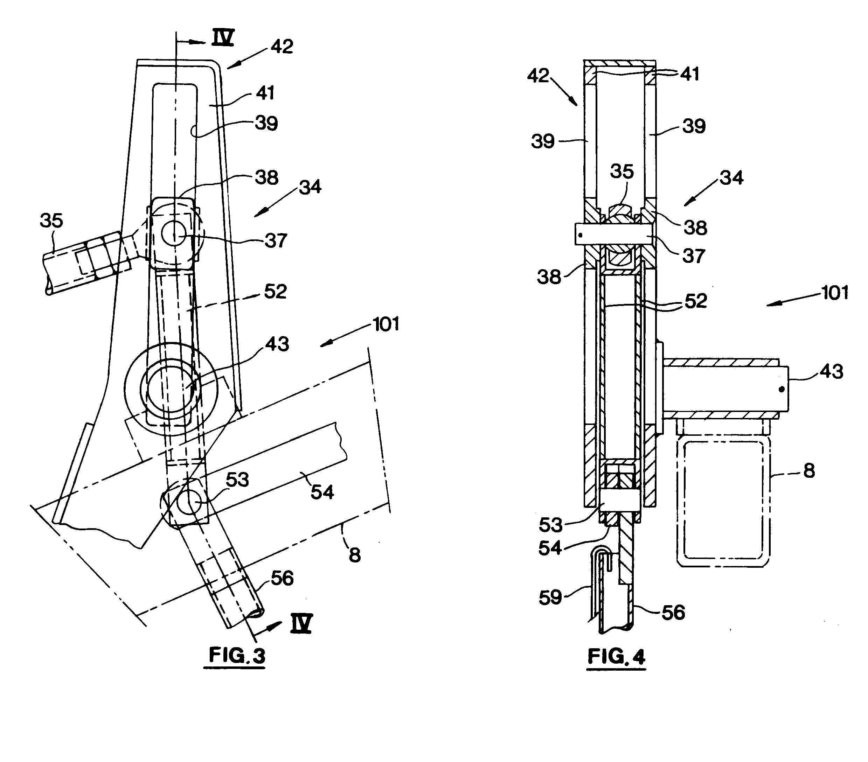

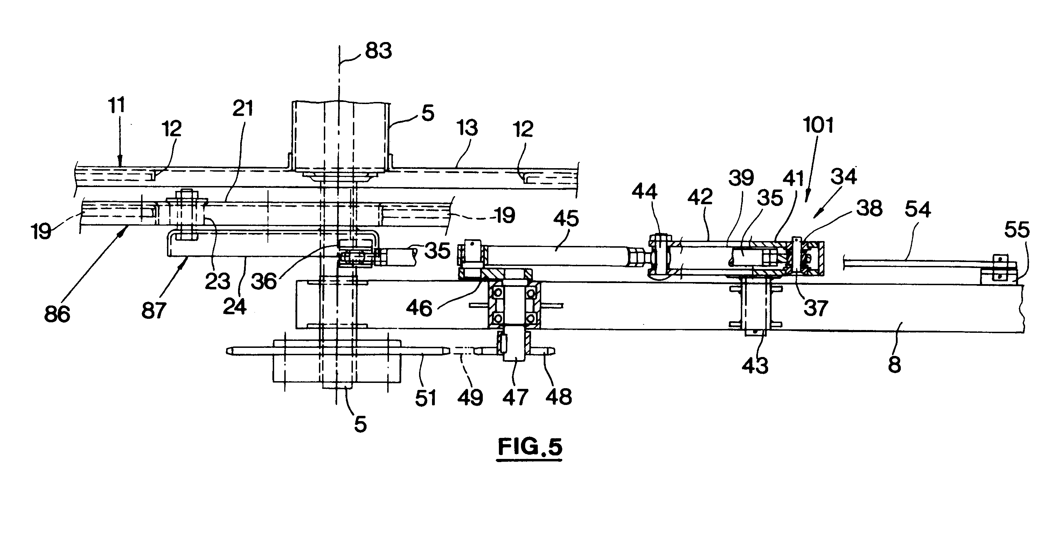

Each drive of the second or further drive means 34 comprises an adjustable con rod 35 pivoted at one end to a lug 36 attached to the associated crank plate 24 and pivotally attached at the distal end by a pivot 37 to a slide block 38 (Figures 3 and 4) which is slidably mounted in slots 39 in a bifurcated arm 41 of a bell-crank lever 42, the con rod 35 passing between the bifurcations of the arm 41. Thus the one (upper) pivot of the bell-crank lever 42 is the pivot 37 which is adjustably positioned by virtue of the slide block 38 for a reason to be explained hereinafter. The central pivot of the bell-crank lever 42 is a pivot 43 provided on the associated reel arm 8, and the third bell-crank pivot is a pivot 44 to which is attached one end of a rod 45 the distal end of which is pivotally attached to one end of a crank arm 46 (best seen in Figure 5), the other end of which is attached to a crank shaft 47 carrying a sprocket 48 driven by a chain 49 from a sprocket 51 attached to the main shaft 5 of the reel 4. The sprocket 51 has three times as many teeth as the sprocket 48 whereby, for each revolution of the reel 4, the crank arm 46 makes three revolutions and hence the steering means 87 also makes three complete oscillations.

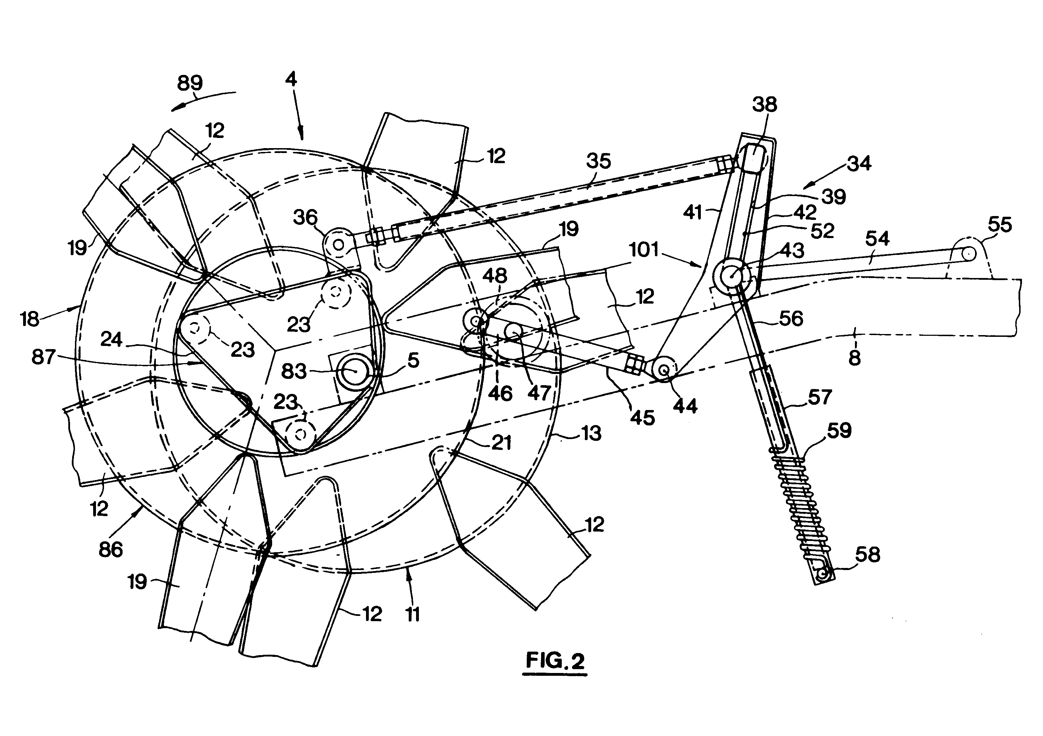

A pull rod 52 (Figures 3 and 4) is pivotally connected at one end to the pivot 37 and is disposed between the bifurcations of the bell- crank lever arm 41. The other end of the pull rod 52 is pivotally connected at a pivot 53 to as well one end of a support link 54 (which itself is pivotally attached at the other end to a lug 55 carried by the associated reel arm 8) as to one end of a rod 56 which is telescopically received in a tube 57 which in turn is pivotally mounted at 58 on the associated side wall 91 of the header. A compression spring 59 (Figures 2 and 4) has one end hooked around the pivot 58 and the other end hooked over the end of the rod 56 which is in the form of a tube as shown in Figure 4.

In use, the header is mounted on the combine harvester via a transverse beam 61 forming part of the header frame 2. The reel 4 is lowered to the required working height by contracting the hydraulic cylinders 9 on the respective sides of the header. In the fully lowered position of the reel 4, the slide blocks 38 of the two drives together forming the second drive means 34 are pushed to the top of the respective bell-crank lever arms 41 by virtue of the rods 56 bottoming in the associated tubes 57 on lowering of the reel 4. This operative position is that illustrated in Figures 1 and 2 of the drawings.

When the crop is to be harvested, drive to the reel 4 is initiated and the latter rotates in the direction 89. If the further drive means 34 were inoperative, the tines 7 would be maintained in a nominal fixed orientation by the presence of the eccentric spiders 18 and the steering means 87 as already described. However, with the reel 4 in a lowered position relative to the cutterbar 1, the further drive means 34 are made operative as still will be described in further details.

On rotation of the main shaft 5 of the reel 4, the sprockets 51 also are rotated and thus the sprockets 48 are driven so as to drive the crank shafts 47 and hence the crank arms 46. Rotation of the crank arms 46 reciprocates the associated rods 45 which in turn rocks the bell-crank levers 42 about the pivots 43. This rocking of the bell-crank levers 42 effects reciprocation of the con rods 35 which in turn rocks the associated crank plates 24 whereby the positional inclination of the tines 7 is varied. In view of the 3:1 ratio of the respective sets of sprockets 51 and 48, the bell-crank levers 42 are rocked three times per revolution of the reel 4, whereby the crank plates 24 also are rocked in the same manner so that the tines 7 are oscillated three times back-and- forth around the respective further axes 84 on the spider arms 12 per one revolution of the reel 4 around the main axis 83. In other words, one full oscillation cycle of the steering means 87 corresponds to one third or 120° of a full revolution of the reel 4. Furthermore, and as already explained, the operative arc 82 of the tine bars 6 as defined by the lines 25 and 27 also extends over an angle of 120°. This operative arc 82 is the result of one oscillation cycle of the steering means 87.

From what precedes it also will be appreciated that the movement of the reel tines 7 is accelerated during half of each oscillation cycle of the steering means 87 and decelerated during the other half of said oscillation cycle. The result thereof is that the locus 63 of the free ends of the tines 7 deviates from the conventional circular shape.

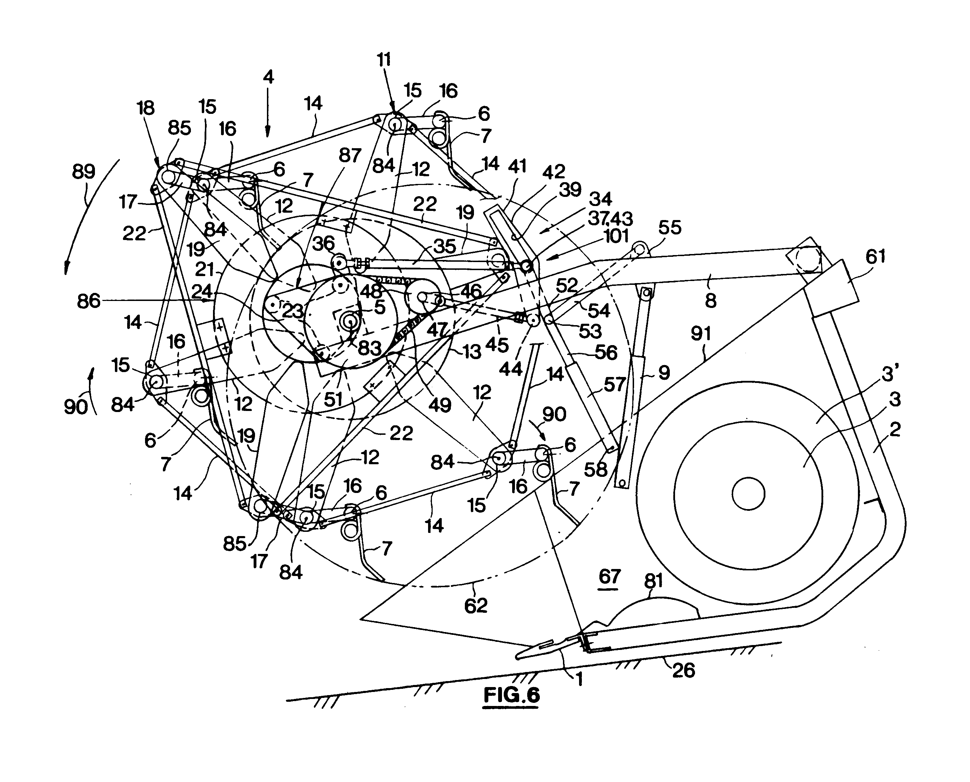

If the crop conditions are good and there is, for example, an absence of flattened or down crop, then the combine harvester operator normally elects to raise the reel from the position shown in Figure 1 to an alternative operative position which is shown in Figure 6. By this movement, the second drive means 34 are neutralized through the intermediary of drive neutralizing means 101 which saves wear on the drive components which are thereby arrested, and also effects a saving in power consumption. This neutralizing of the second drive means 34 is effected as follows. When the reel arms 8 are raised, the bell-crank levers 42 also are raised but the respective slide blocks 38 are held stationary by the springs 59 which are presently in extension. Thus, the bell-crank levers 42 move past the slide blocks 38 until such time as the slide block pivots 37 coincide with the respective central bell-crank pivots 43. At this point, no further relative movement between the bell- crank levers 42 and the slide blocks 38 is possible so that continued raising of the reel arms 8 pulls the rods 56 out of the tubes 57. It will be appreciated that the arresting of the relative movement between the bell-crank levers 42 and the slide blocks 38 is effected by the latter bottoming in the slots 39 in the bell-crank arms 41. It will also be appreciated that, when the respective pairs of pivots 37 and 43 coincide, the rocking of the bell-crank levers 42 on rotation of the reel 4 (this part of the drive not being neutralized) no longer causes reciprocation of the con rods 35 whereby the second drive means 34 is neutralized.

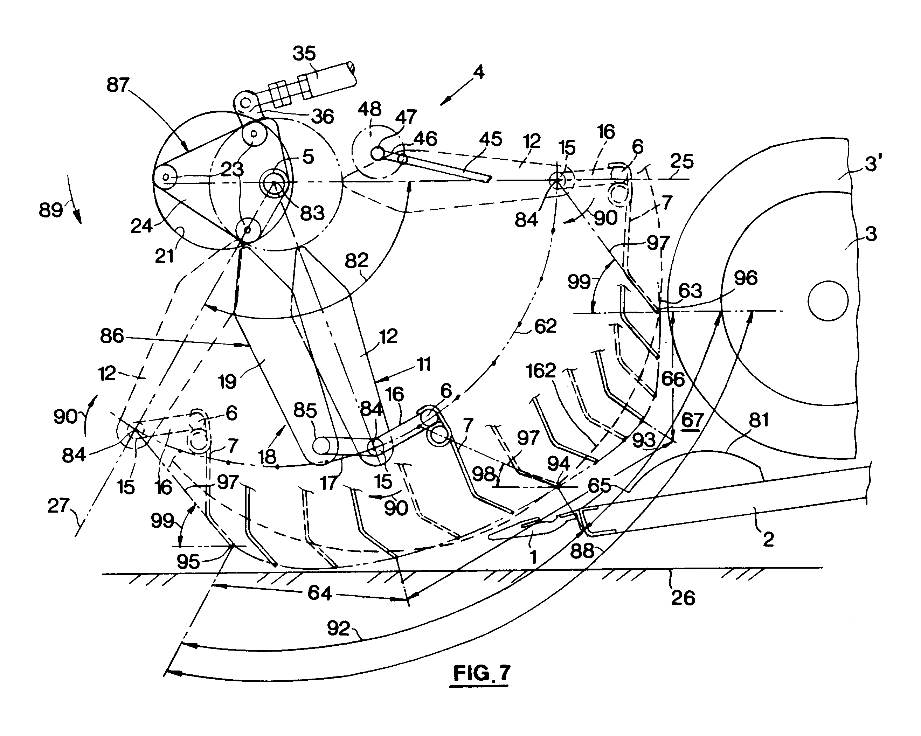

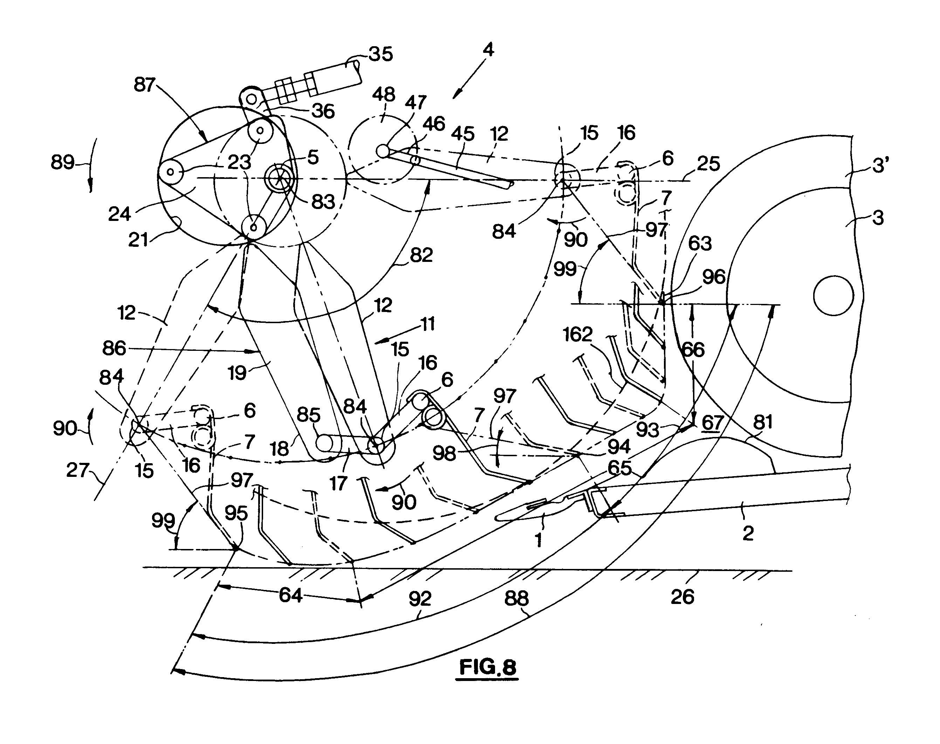

Returning briefly to Figure 6 of the drawings, it will be seen that the locus 62 of the outer tips of the tines 7 is a circle which is as with a conventional header. However, Figures 1, 7 and 8 illustrate the non-circular loci 63 which result from the present invention. These loci 63 comprise the operative section 88 as already described and which basically is the section wherein the tines 7 engage crop material and sweep it across the cutterbar 1 in a generally rearward direction to finally release said crop material at a location rearwardly of the cutterbar 1 and in front of the auger 3. The operative section 88 of the non-circular locus 63 basically has three distinct portions; the first portion 64 being arcuate but lying close to the ground 26 in order to pick up any flattened crop. The following portion 65 of the operative section 88 of the locus 63 is seen to be substantially linear and extends upwardly from the first portion 64 very close above the cutterbar 1. The final portion 66 of the operative section 88 of the locus 63 which follows the second portion 65 is also substantially linear and extends generally vertically very close to the forward edge of the auger 3 to which the crop material cut by the cutterbar 1 needs to be transported in an efficient manner. The transition between the second and third portions 65 and 66 extends into the generally triangular (as seen in side view) dead space 67 which traditionally exists between the cutterbar 1 and the auger 3 of a header. This extension into the dead space 67 helps to clear, at least to a better extent than normal, any crop material which tends to lodge in this space. It will be seen from Figure 8 when compared with Figure 7 that a larger oscillation stroke of the steering means 87 causes the tines 7 to sweep deeper into the dead space 67 on the one hand and is such as to make the second and third portions 65, 66 of the operative section 88 of the locus 63 more linear on the other hand.

It will be appreciated that the tines 7 preferably should be oriented generally vertically when they enter into the crop material at the forward end of the operative section 88 of the locus 63 so as to facilitate this entrance (especially when the crop material is flattened) and to reduce cutterbar losses (i.e. grain losses occurring in front of the cutterbar 1 due to a.o. the reel components shaking grain kernels out of the ears). Similarly the reel tines 7 preferably also should be oriented generally vertically at the rearward end of the operative section 88 of the locus 63 so as to facilitate the release of crop material to the auger 3. However, inbetween these two extreme positions the reel tines 7 preferably should be generally inclined relative to vertical in a manner to facilitate lifting of the crop material and positively conveying it across the cutterbar 1 in a rearward direction.

These desirable features are obtained by the reel under consideration o.a. by timing the first and further drive means 28, 34 so that, in the operative section 88 of the locus 63, the movement of the tines 7 changes from an accelerated to a decelerated movement at a location 94 generally vertically above the cutterbar 1 with the positional inclination of the crop-engaging members and more specifically of the reel tines 7 thereof relative to the horizontal being the smallest at this location. In other words, the steering means 87 pass through an extreme position when the reel tines 7 pass across the cutterbar 1. Furthermore, the operative section 88 of the non-circular locus 63, i.e. the section of the locus 63 where the reel tines 7 are in contact with the crop material, should correspond substantially with one full oscillation cycle of the steering means 87. Thus the steering means 87 start from one extreme position when the reel tines 7 are at the forward end 95 of said operative section 88 of the locus 63 and pass via the other extreme position (when the reel tines 7 are positioned generally vertically above the cutterbar 1) to finally return to said one extreme position when the reel tines 7 are at the rearward end 96 of the operative section 88 of the locus 63. Accordingly the portion 92 of the non-circular locus 63 associated with the half of said one full oscillation cycle wherein the crop-engaging members 6, 7 are accelerated, is positioned generally in front of the cutterbar 1 and the portion 93 of the non-circular locus 63 associated with the half of said one full oscillation cycle wherein the crop-engaging members 6, 7 are decelerated, is positioned generally rearwardly of the cutterbar 1. The reel tines 7, when in their position of maximum inclination relative to the horizontal at or proximate to the rearward end 96 of the operative section 88 of the locus 63, have their free ends located generally proximate to the forward edge of the header auger 3 so that the portion 93 of the operative section 88 of the locus 63 wherein the reel tines 7 are decelerated, extends generally between the cutterbar 1 and the header auger 3.

Returning now briefly to the transition between the second and third portions 65 and 66 of the locus 63 as already described, it further also will be appreciated that, at this transition, the straight line 97 between the free end of the reel tines 7 and the further pivot axis 84 of said reel tines 7 on the reel 4 (as seen in side view of the reel) should be aligned with the radius of the reel 4 extending between the main axis 83 and said further axis 84, whereby maximum penetration of the reel tines 7 into the dead space 67 is obtained. This is obtained by proper dimensioning and positioning of various components of the reel as will be appreciated. Also the timing of the first and further drive means 28 and 34 should be such that this alignment between the radius of the reel and said straight line 97 is obtained when the reel tines 7 have their free ends positioned substantially midway between the cutterbar 1 and the forward edge of the header auger 3. This alignment is obtained upon completion of substantially three quarters of the oscillation cycle of the steering means 87. To illustrate the difference in the depth of penetration of the reel tines into the crop transfer zone 67 when comparing a conventional header with the header embodying the present invention, the circular locus 162 of a conventional reel also has been added in Figures 1, 7 and 8 illustrating the non-circular locus 63 of the arrangement according to the present invention. Both loci 63 and 162 are positioned in the close vicinity of both the cutterbar 1 and the auger 3.

When positioned with their free ends at the turning point 94 of the locus 63 (i.e. at the position where the accelerated movement of the reel tines 7 turns into a decelerated movement, or where the reel tines 7 are at their maximum positional inclination relative to the vertical), the reel tines 7 are oriented so that the straight line 97 between said free ends of the reel tines 7 and the associated further pivot axes 84 defines an angle 98 in the range of 0°-20° relative to the horizontal. When positioned in the positions 95, 96 corresponding with the start and end of an oscillation cycle of the steering means 87 (i.e. at the position where the reel tines 7 are at their minimum positional inclination relative to the vertical), said straight line 97 defines an angle 99 in the range of 30°-60° with the horizontal.

It will be appreciated that, by virtue of the tine bars 6 being mounted via crank arm 16 in offset relationship relative to the respective further pivot axes 84, the main dimension of the reel tines 7 is inclined at a different angle relative to the horizontal than said straight line 97 between the free ends of the tines 7 and the associated further axes 84. To the extent that the aforementioned offset is in the direction toward the auger 3, said main dimension of the reel tines 7 always is inclined at a steeper angle relative to the horizontal than said straight line 97. By this offsetting fo the reel tines 7 it has become possible to orient said reel tines 7 so that, when positioned in the vicinity of the cutterbar 1, the main dimension of said reel tines 7 is oriented generally perpendicularly to the non-circular locus 63 at this location. This is advantageous to the extent that, when the tines are excessively loaded over this portion of the locus 63 and thus are flexed against their general direction of movement, they will not interfere with the cutterbar 1.

As described above, each steering means 87 controls the oscillating movement of three tine bars 6 which are 120° spaced apart. The steering means 87 further also completes three cycles per one revolution of the reel 4. One oscillation cycle of the steering means 87 thus also corresponds to one third or 120° of a full revolution of the reel 4. This relationship between the number of tine bars 6 of which the angular position is controlled by a steering means 87 on the one hand and the number of oscillations of this steering means 87 on the other hand is essential to ensure that the operative section 88 of the locus 63 always remains properly positioned relative to the cutterbar 1 and the auger 3. This condition can be stated in more general terms as follows : The (or each) steering means 87, which controls the angular position of n tine bars 6 having their respective further pivot axes 84 equiangularly spaced around the main axis 83 of the reel 4, also should complete n oscillation cycles during one full revolution of the reel 4. Thus, one oscillation cycle of the steering means 87 corresponds to $360/n°$ of a full revolution of the reel and, as this $360/n°$ generally should correspond to the operative section 88 of the locus 63, it will be appreciated that n in this formulae cannot vary widely. From a practical viewpoint, n may equal only 2, 3, 4 or 5 with 3 clearly being the preferred value.

While that the arrangement as described in connection with Figures 1 to 6 comprises further drive means 34 which includes a.o. a drive neutralizing means, it will be appreciated that these drive neutralizing means may be left out whereby the further drive means 34 can be simplified rather substantially. In its most simple form the further drive means 34 consists of a linkage mechanism incorporating a crank arm 46 which is drivingly coupled to the reel shaft 5 to be rotated thereby, and a link 35 connected between said crank arm 46 and the steering means 87 of the inclination control means 86. In any event, the transmission ratio between the reel shaft 5 and the crank arm 46 should be so that for any one revolution of the reel 7, the crank arm 46 makes n rotations wherein n represents the number of tine bars 6 of which the positional inclination is controlled by said crank arm 46 and the associated steering means 87.

As already mentioned, the tine bars 6 are divided in two sets such that one tine bar 6 of one set alternates with one tine bar 6 of the other set. Stated otherwise, one tine bar 6 of one set is positioned precisely in the middle between two tine bars 6 of the other set. In the preferred embodiment illustrated in the drawings, the two sets of tine bars 6 are 60° offset relative to each other. This offsetting of the tine bars 6 of both sets also necessitates a corresponding timing of the oscillations of the respective steering means 87 to the extent that, when one tine bar 6 of one set e.g. is positioned at the turning point 94 of the locus 63 above the cutterbar 1, the adjacent tine bars 6 of the other set are positioned at the forward, respectively rearward ends 95 and 96 of the operative section 88 of the locus 63. As already mentioned, the tines 7, when positioned with their free ends at the turning point 94 of the locus 63, assume a maximum positional inclination relative to the vertical and, when positioned at the forward or rearward ends 95, 96 of the operative section 88 of the locus 63, assume a minimum positional inclination relative to the vertical. Accordingly, when one steering means 87 associated with the one set of tine bars 6 is in one extreme position, the other steering means 87 associated with the other set of tine bars 6 should be in the other extreme position. This also means that the cranks 46 of the further drive means 34 on both sides of the reel 4 should be 180° out of phase. If this requirement is respected, the loci 63 of the reel tines 7 associated with both sets of tine bars 6 overlap each other as will be appreciated. Thus all crop-engaging members 6, 7 have identically positioned operative arcs 88 of the loci 63 in the cutterbar area.

Keeping in mind that all tines 7, of which the positional inclination is controlled by one and the same steering means 87, at all times assume identical positional inclinations, it also can be derived from the foregoing that, when one tine bar 6 has its tines 7 positioned at the turning point 94 of the locus 63, all tines 7 of one set of tine bars 6 assume one positional inclination which is different from the positional inclination of the tines 7 of the other set of tine bars 6. The foregoing is illustrated in the figures 7 and 8. However, as the reel 4 rotates further in the direction 89, the foregoing changes and, when the tines 7 of one tine bar 6 have their free ends at the point of maximum penetration into the dead space 67, i.e. when the oscillation cycle of the corresponding steering means 87 is 3/4 complete, all tines 7 of both sets of tines bars 6 have the same intermediate positional inclination. This condition is illustrated in Figure 1.

The nominal fixed orientation of the tines 7 is set by angular adjustment of the crank plates 24 about the main shaft 5 of the reel 4. The adjustability of the con rods 35 enables this initial nominal orientation to be set as required.

The extent of rocking movement of the bellcrank levers 42, and hence the extent of oscillation of the crank plates 24, is determined a.o. by the length of the crank arms 46 and Figures 7 and 8 illustrate two different extents of said oscillating movement; said figures illustrating an overall stroke of the steering means 87, of respectively 30° and 40°.

It will be seen that the employment of the arrangement as described presents the tines 7 over the operative arc 88 adjacent the cutterbar 1 and auger 3 in an optimum manner in order to fulfil the three basic requirements of lifting flattened crop, taking it close to the cutterbar 1 for cutting, and transporting cut crop as close as possible to the auger 3 before disengaging it. In the latter respect, it will be noted that, during operation, the tines 7 initially have their main dimension oriented generally vertically and have their operative ends moving downwardly along a generally vertical section of the locus 63 when entering the crop material on the field (see the section of the locus 63 immediately forwardly of the portion 88 in Figure 1). This movement quickly changes into a generally rearwardly and horizontally directed movement in the section 64 of the locus 63 while that, at first, the general orientation of the tines remains substantially the same i.e. with the main dimension oriented generally vertically. The foregoing taken in combination with the forward movement of the combine harvester ensures that the reel tines 7 enter the crop material smoothly whereby cutterbar losses are reduced and the reel tines 7 positively engage the crop material without any hesitation for subsequently lifting and conveying said crop material. Thereafter, the rearward movement of the reel tines 7 gradually changes into a slightly upwardly and rearwardly directed movement while that the tines 7 equally gradually are inclined towards an inclined orientation for providing a scooping effect whereby crop material is presented in a positive manner to the cutterbar 1 for cutting and subsequently is conveyed rearwardly over the cutterbar equally in a positive manner. As the movement of the reel tines 7 changes from a generally rearward movement into a generally vertical movement at the transition from section 65 to section 66 of the locus 63, said reel tines 7 penetrate much deeper into the dead zone 67 than is conventional, whereby possible hesitation in the transfer of crop material from the cutterbar 1 to the auger 3 is greatly reduced. Simultaneously as the reel tines 7 move rearwardly beyond the cutterbar 1, the orientation of said tines 7 gradually returns to a generally vertical orientation. This generally vertical orientation combined with the upward movement in a generally vertical direction of the reel tines 7 in the last portion 66 of the operative section 88 of the locus 63 and in the immediate vicinity of the forward edge of the auger 3 effects a clean disengagement of the crop material so that the latter is not carried around the reel 4 by the tines 7 and a smooth transfer of the crop material to the auger 3 is guaranteed.

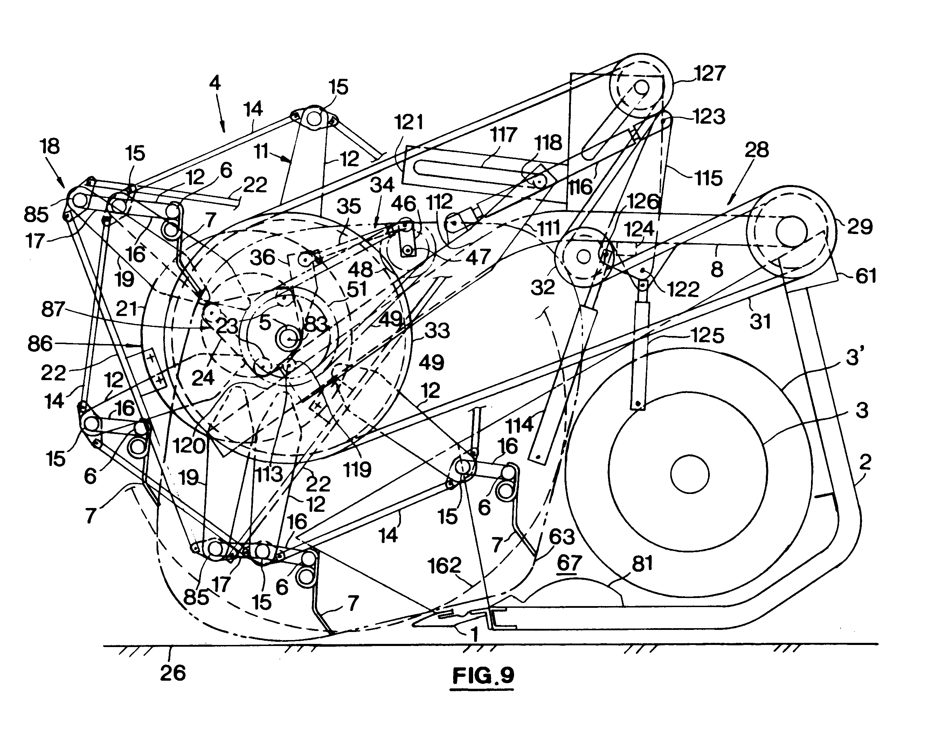

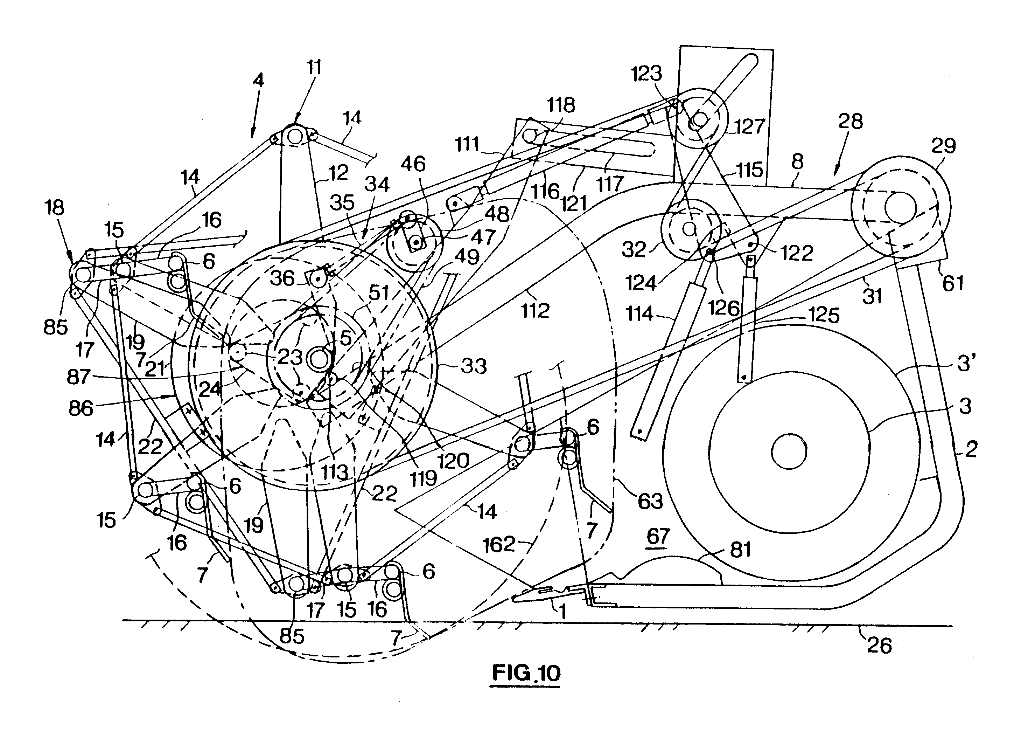

Turning now to Figures 9 and 10, these illustrate a further development of a reel structure comprising inclination control means including steering means on the one hand and drive means associated with the steering means on the other hand for continuously varying the positional inclination of the crop-engaging members during rotation of the reel whereby a non-circular locus of the free ends of the crop-engaging members is obtained. The basic construction is as in the first embodiment and like components are allocated similar reference numerals. However, the second or further drive means 34 are in their simplest form as already described hereabove and which is obtained by the elimination of the drive neutralizing means 101. These further drive means 34 thus consist of a linkage mechanism incorporating a crank arm 46 which is drivingly coupled to the reel shaft 5 to be rotated thereby, and a link 35 connected between said crank arm 46 and the steering means 87 of the inclination control means 86.

While that conventional reels, of which the tines define circular tine paths or loci, usually are adjustable in a generally horizontal fore-and-aft direction to enable adjustment of the tine paths or loci relative to the cutterbar and the auger, it will have been noticed that the reel according to Figures 1-6 is mounted at a fixed position on the reel arms 8. This simplifies to some extent the design of the further drive means 34 including the drive neutralizing means 101 which, in the arrangement according to Figures 1-6 also are mounted at a fixed position relative to the reel axis 83 on the reel arms 8. Furthermore, the advantages of the fore-and-aft adjustability of conventional reels also are realized to a great extent in the arrangement according to Figures 1-6 by the non-circular shape of the locus 63 of the free ends of the reel tines 7 so that the fore-and-aft adjustability can be dispensed with if so desired. This does not mean however that it would be impossible to make the reel according to Figures 1-6 adjustable in said generally fore-and-aft direction. Such a combination indeed is shown in Figures 9 and 10 which will be described hereafter in more details. Actually, by making the reel according to Figures 1-6 (and thus having a non-circular locus) adjustable in the generally fore-and-aft direction a new dimension is added to the advantages thereof. Keeping in mind that the locus 63 comprises a generally linear section 65 which overlies the cutterbar 1 (and which is inclined upwardly as seen in the rearward direction), it will be appreciated that a given adjustment of the reel in the generally fore-and-aft direction results in a relatively smaller variation in the vertical spacing between the tine path and the cutterbar than is the case with conventional reels having a circular tine path. However, non- circular tine paths also provide other new possibilities as will be described hereafter.

Considering now specifically Figures 9 and 10, it will be seen that, unlike in the arrangement according to Figures 1-6, the reel 4 is mounted at its opposite ends on the reel arms 8 through the intermediary of reel adjustment members 111; one such member being associated with each arm 8. These adjustment members 111 are adjustable in the longitudinal direction of the arms 8 so as to permit adjustment of the non-circular locus 63 of the free ends of the reel tines 7 relative to the cutterbar 1. This adjustment thus is generally in the fore-and-aft direction of the machine. Preferably, the reel arms 8 upon which the reel adjustment members 111 are mounted for generally fore-and-aft adjustment, are inclined downwardly as seen in the forward direction whereby the non-circular locus 63 of the free ends of the tines 7 is lowered, respectively raised relative to the cutterbar 1 when the reel adjustment members 111 are adjusted in the generally forward direction, respectively the generally rearward direction relative to the arms 8. This aspect in combination with the non-circular shape of the locus 63 has made it possible to position the lowermost point of said locus 63 at a substantial distance below the level of the cutterbar 1 (at a position forwardly of said cutterbar 1) and yet to avoid interference between this cutterbar 1 and the tines 7 on the one hand and to maintain a minimum vertical spacing between the cutterbar 1 and the locus 63 on the other hand. This may be advantageous in extremely adverse crop conditions as it thereby has become possible to lift down crop from a deeper location beneath the level of the cutterbar 1 than was usual.

Following a further aspect of the instant invention, the locus 63 of the free ends of the tines 7 additionally also may be angularly adjustable relative to the cutterbar 1. This may be accomplished by making the reel adjustment members 111 angularly adjustable relative to the arms 8. This even further accentuates the advantage which has been described hereabove and following which the lowermost point of the non- circular locus 63 may be positioned at a level substantially below the level of the cutterbar 1. The pivot axis 113 around which this angular adjustment is possible preferably is positioned generally at or proximate to the main axis 83 of the reel 4. The arrangement may be such that the adjustment members 111 are adjustable in the generally fore-and-aft direction relative to the arms 8 (and at an inclination relative to the horizontal) in a predetermined range while that the range of the additional angular adjustability extends from a point generally at or proximate to the forward end of said first range of generally fore-and- aft adjustability. However, preferably the generally fore-and-aft and angular adjustments of the reel adjustment members 111 are effected simultaneously so that, when the locus 63 is shifted relative to the cutterbar 1 in the generally fore-and-aft direction, the angular position of said locus 63 relative to the cutterbar 1 is varied at the same time. Means are provided for effecting this combined generally fore-and-aft angular adjustments and basically comprise position control means 114-116 and guide means 117-121. The position control means 114-116 are operatively associated with the reel adjustment members 111 for effecting movement thereof along predetermined paths which are determined by the guide means 117-121.

Specifically, each reel adjustment member 111 is formed by an elongated member of inverted general U-shape and which basically overlies the corresponding reel arm 8. The reel 4 is rotatably mounted, at each of its opposite ends, at or adjacent the forward end of a corresponding one of said inverted generally U-shaped members 111. The aforementioned guide means 117-121 basically consist of first and further cooperating guide members 119, 120 respectively 117, 118, 121. The first cooperating guide members 119, 120 are formed by a support roller 119 rotatably mounted on each reel adjustment member 111 within the inverted U-shape thereof and a corresponding roller surface 120 on the corresponding reel supporting arm 8 disposed for the support roller 119 to roll thereacross and generally longitudinally of said arm 8. The support roller 119 is provided generally at or adjacent the forward end of the corresponding reel adjustment member 111 and thus also adjacent the main axis 83 of the reel 4. The further cooperating guide members 117, 118, 121 are formed by an elongated slot 117 in a plate 121 attached to each reel arm 8 and a guide roller 118 rotatably mounted on the corresponding reel adjustment member 111 generally at or adjacent the rear end thereof. Each elongated slot 117 is positioned at an angle relative to the corresponding roller surface 120 and is adapted to receive the corresponding guide roller 118 therein for supporting said rearward end of the corresponding reel adjustment member 111 on the corresponding reel arm 8 for adjustment in a direction at an angle relative to said roller surface 120 on said reel arm 8. It thus will be appreciated from what precedes that the axis of each support roller 119 defines the pivot axis 113 around which the corresponding reel support member 111 additionally is angularly adjustable.

The position control means 114-116 preferably comprise a hydraulic cylinder 114 acting between each reel adjustment member 111 and the associated reel arm 8 for causing the support roller 119 to roll across the roller surface 120 lengthwise of the arm 8 and the guide roller 118 to move longitudinally of the elongated slot 117 in the corresponding plate 121. The position control means 114-116 preferably also comprise a rocking member 115 pivotally mounted at a first pivot axis 122 on each reel arm 8 and a link 116 extending between a second pivot 123 on each rocking member 115 and the associated reel adjustment member 111. The associated hydraulic cylinder 114 extends between the header frame 2 and a third pivot 126 on each rocking member 115. The arrangement is such that, in a first adjustment range of the hydraulic cylinders 114 and until abutment means 124 between the rocking members 115 and the associated reel arms 8 become operative, the respective reel adjustment members 111 are adjustable relative to the corresponding arms 8 along the aforementioned predetermined paths determined by the combined fore-and- aft and angular movements. Adjustment of the hydraulic cylinders 114 in this range results in a generally fore-and-aft movement and an angular adjustment of the locus 63 of the free ends of the reel tines 7 relative to the cutterbar 1. In a further adjustment range of the hydraulic cylinders 114 when the abutment means 124 engage the arms 8, said reel arms 8 are adjustable relative to the header frame 2 for adjusting the reel 4 in a generally vertical direction relative to the cutterbar 1 and the auger 3. The arrangement is such that, as the hydraulic cylinders 114 pass from the first to the further adjustment ranges and the abutment means 124 thus become operative, the reel adjustment members 111 are positioned at their rearwardmost positions relative to the reel arms 8 whereby the non-circular locus 63 extends in the immediate vicinity of both the cutterbar 1 and the forward edge of the header auger 3. When the hydraulic cylinders 114 are adjusted within their further adjustment range, the non-circular locus 63 of the free ends of the reel tines 7 is raised, respectively lowered generally in the vertical direction relative to the cutterbar 1 and in front of the header auger 3.

Stop means 125, preferably in the form of telescopic elements, are provided between the reel arms 8 and the header frame 2 for limiting downward movement of the reel arms 8 relative to the cutterbar 1; said stop means 125 becoming operative when the aforementioned abutment means 124 become inoperative and vice versa. The arrangement further is such that when the stop means are operative and the hydraulic cylinders 114 are adjusted in their first adjustment range, the non-circular locus 63 is displaced both in the generally fore-and-aft direction and angularly relative to the cutterbar 1 as already described hereabove.

From what precedes, it will be appreciated that the pair of hydraulic cylinders 114 (one on each side of the header) is operable to control a multitude of movements of various components and thus that a relatively inexpensive arrangement is obtained which yet complies with a plurality of requirements.

The drive to the reel 4 consisting of a belt drive including a.o. a drive belt 31, a drive pulley 29, a driven pulley 33 and an idler pulley 32 further also includes a spring loaded idler pulley 127 as is conventional and which accomodates the generally fore-and-aft adjustment of the reel 4 as described hereabove. To the extent that this is conventional in the art of fore-and-aft adjustable reel structures, no further details thereof will be given here.

It should also be noted that the inclination control means 86 including the steering means 87 on the one hand and the further drive means 34 associated with the steering means 87 on the other hand equally are supported on the reel adjustment members 111 for adjustment in unison therewith and with the reel 4 relative to the cutterbar 1. As already mentioned, the further drive means 34 used in the arrangement according to Figures 9 and 10, do not comprise drive neutralizing means 101 and as such are of a simplified design when compared with the further drive means 34 of the arrangement according to Figures 1-6. However, drive neutralizing means similar to those described herebefore also may be included in the further drive means 34 of the arrangement according to Figures 9, 10.

It will be appreciated from the foregoing description that the present invention affords a significant advance in the art of presenting crop material to the cutterbar of a header and transporting cut crop material to the header auger, whereby harvesting efficiency is considerably increased.

More specifically, the reel according to the present invention fulfils a multitude of requirements. This reel, of course, operates fully satisfactorily when harvesting under normal crop conditions. However, also when harvesting under adverse crop conditions and when, with conventional headers there would be a tendency for crop material to lodge in the transfer zone 67 between the cutterbar and the auger, the non-circular shape of the locus 63 of the arrangement according to the present invention and, which extends deeper into said zone than is conventional, is effective to continuously and smoothly transfer such crop material to the auger and thus to overcome this known problem. Furthermore, when the crop conditions are really bad such as when crop is flattened in the field, the combination of the non-circular locus 63 with the fore-and-aft and eventually also the angular adjustability of this locus 63 permits the reel to be positioned so that, at the same time the lowermost point of the locus 63 is positioned at a substantial distance below the level of the cutterbar on the one hand and the operative section of the locus still extends deeper than is conventional into the crop transfer zone 67. Thereby, down crops are lifted adequately for being presented to the cutterbar for cutting on the one hand and cut crops are continuously and smoothly transferred from the cutterbar to the auger as is required on the other hand. This avoids losses due to crop material not being cut and passing underneath the header on the one hand and greatly reduces irregular feeding which possibly could result in plugging on the other hand.

These advantages will become particularly evident when considering the relative positions of the non-circular locus 63 according to the present invention and the circular locus 162 of a conventional reel shown in the Figures 9 and 10. Considering first Figure 9, it will be seen that the conventional reel providing the circular locus 162 shown therein is positioned so that said circular locus 162 extends in the immediate vicinity of both the cutterbar 1 and the auger 3. Yet the non-circular locus 63, which equally extends in the immediate vicinity of both the cutterbar 1 and the auger 3 extends much deeper into the transfer zone 67 whereby the reel according to the present invention provides a better transfer of crop material from the cutterbar to the auger. In addition thereto, the non-circular locus 63 also extends already closer to the ground than the circular locus 162 of the conventional reel at a location forwardly of the cutterbar 1, which again is advantageous.

Turning now to Figure 10 showing the header adjusted for harvesting down crops, it will be noted that both the non-circular locus 63 according to the present invention and the circular locus 162 of a conventional reel are shown therein with their lowermost point at substantially the same distance beneath the level of the cutterbar 1. This position is obtained, as already explained, by moving the reel forwardly and downwardly and is necessary for lifting down crops in a satisfactory manner. It will be noted that, in this setting, the non- circular locus 63 is positioned very much closer to the auger 3 and deeper in the transfer zone 67 than the circular locus 162 of the conventional reel. Also, the non-circular locus 63 still extends in the immediate vicinity of and above the top of the cutterbar 1 to clear any crop material that otherwise would tend to lodge thereon. In contrast therewith, the circular locus 162 of the conventional reel is positioned almost entirely in front of the cutterbar and in any event at a rather substantial distance from the upper side of the cutterbar on the one hand and from the transfer zone 67 and the auger 3 on the other hand. This obviously is quite disadvantageous for transferring crop material from the cutterbar to the auger.

From what precedes it will be appreciated that the objective as set out in the introduction of this specification has been accomplished with the embodiment, as shown in the drawings and described herebefore. It also will be understood that, within the scope of the invention as claimed, changes to the details, which have been described and illustrated to explain the nature of this invention, will occur to and may be made by those skilled in the art upon a reading of this disclosure.

Aspects of the header with the reel as described herein are claimed in the co-pending EP-A-0280.790 and EP-A-0.280.791.

**Claims**

1.  A header for an agricultural machine comprising :
    - a header frame (2)
    - a cutterbar (1) attached to the header frame (2) and operable to cut standing crop;
    - a rotatable reel (4) having a transverse shaft (5) defining the rotational main axis (83) thereof and including a plurality of crop-engaging members (6, 7) rotatably mounted thereon about respective further axes (84) disposed around the main shaft (5);
    - first drive means (28) for rotatably driving the reel (4) in one direction (89);
    - inclination control means (86) including steering means (87) and being operable, during rotation of the reel (4) in said one direction (89), to rotate the crop-engaging members (6, 7) around the respective further axes (84) in the opposite direction (90); the arrangement being such that, if the steering means (87) were to be held in a fixed position, the crop-engaging members (6, 7) would be maintained in a fixed orientation relative to the horizontal whereby the free ends of the crop-engaging members (6, 7) would define a circularly shaped locus (62, 162);

- further drive means (34) associated with the steering means (87) for oscillating said steering means (87) during rotation of the reel (4) whereby the crop-engaging members (6, 7) equally are oscillated back-and-forth around their respective further pivot axes (84) on the reel (4) and the locus (63) of the free ends of said crop-engaging members (6, 7) deviates from said circular shape (62, 162); and

- generally fore-and-aft extending reel supporting members (8) at the transversely opposite ends of the reel (4) for supporting the reel (4) on the header; said reel supporting members (8) being adjustably mounted on the header frame (2) so as to permit generally vertical adjustment of the reel (4) relative to the cutterbar (1);

and

characterized in that :

the reel (4) is mounted on the reel supporting members (8) through the intermediary of reel adjustment members (111) which, on the one hand, are adjustable relative to the reel supporting members (8) in the generally fore-and-aft direction so as to permit adjustment of the non-circular locus (63) of the free ends of the crop-engaging members (6, 7) relative to the cutterbar (1) in said generally fore-and-aft direction and, on the other hand, also are angularly adjustable relative to said reel supporting members (8) around a pivot axis (113) generally at or proximate to the main axis (83) of the reel so as to additionally permit angular adjustment of said non-circular locus (63) relative to said cutterbar (1).

2. A header according to claim 1 characterized in that the portions (112) of the reel supporting members (8) upon which the reel adjustment members (111) are mounted for generally fore-and-aft adjustment, are inclined downwardly as seen in the direction of forward operative movement of the header whereby said locus (63) of the free ends of the crop-engaging members (6, 7) is lowered, respectively raised relative to the cutterbar (1) when said reel adjustment members (111) are adjusted in the generally forward direction, respectively the generally rearward direction relative to the reel supporting members (8).

3. A header according to claim 1 or 2 characterized in that the reel adjustment members (111) are adjustable in the generally fore-and-aft direction relative to the reel supporting members (8) in a predetermined range with the range of said additional angular adjustability extending from a point generally at or proximate to the forward end of said range of generally fore-and-aft adjustability.

4. A header according to claim 1 or 2 characterized in that means (114- 121) are provided for effecting said generally fore-and-aft and angular adjustments of the reel adjustment members (111) simultaneously so that, when the locus (63) of the free ends of the crop-engaging members (6, 7) is shifted relative to the cutterbar (1) in the generally fore-and-aft direction, the angular position of said locus (63) relative to said cutterbar (1) is varied at the same time.

5. A header according to claim 4 characterized in that said means (114-121) for effecting said combined generally fore-and-aft and angular adjustments comprise :

- guide means (117-121) for guiding each said reel adjustment member (111) along a predetermined path relative to the corresponding reel supporting member (8) and determined by said combined generally fore-and-aft and angular adjustment; and

- position control means (114-116) operatively associated with said reel adjustment members (111) for effecting movement of said members (111) along said paths.

6. A header according to claim 5 characterized in that :

- each reel adjustment member (111) is formed by an elongated element of inverted general U-shape; and

- said guide means (117-121) are formed, on the one hand, by first cooperating guide members (119- 120) generally at or adjacent the forward end of said reel adjustment member (111) for supporting said forward end of the reel adjustment member (111) on the corresponding reel supporting member (8) for adjustment generally longitudinally thereof, and, on the other hand, by further cooperating guide members (117, 118, 121) generally at or adjacent the rearward end of said reel adjustment member (111) for supporting said rearward end of the reel adjustment member (111) on the corresponding reel supporting member (8) for adjustment in a direction at an angle relative to said generally longitudinal direction.

7. A header according to claim 6 characterized in that :
   - the first cooperating guide members (119-120) are formed by a support roller (119) rotatably mounted on each reel adjustment member (111) within the inverted U-shape thereof and a roller surface (120) on the corresponding reel supporting member (8) and disposed for the support roller (119) to roll thereacross, and
   - the further cooperating guide members (117, 118, 121) are formed by an elongated slot (117) in a plate (121) attached to each reel supporting member (8) and a guide roller (118) rotatably mounted on the corresponding reel adjustment member (111); each elongated slot (117) being positioned at an angle relative to the corresponding roller surface (120) and being adapted to receive the corresponding guide roller (118) therein and the axis of each support roller (119) defining the pivot axis (113) around which the corresponding reel support member (111) additionally is angularly adjustable.

8. A header according to claim 7 characterized in that the reel (4) is rotatably mounted at its transverse opposite ends on the respective reel adjustment members (111) adjacent the respective forward ends thereof and in the vicinity of the respective support rollers (119) provided thereon.

9. A header according to any of the claims 5 to 8, characterized in that the position control means (114-116) comprise a hydraulic cylinder (114) acting between each reel adjustment member (111) and the associated reel supporting member (8).

10. A header according to any of the claims 5 to 8, characterized in that the position control means (114-116) comprise :
    - a rocking member (115) pivotally mounted at a first pivot axis (122) on each reel supporting member (8);
    - a link (116) extending between a second pivot (123) on each rocking member (115) and the associated reel adjustment member (111); and
    - a hydraulic cylinder (114) extending between the header frame (2) and a third pivot (126) on each rocking member (115); the arrangement being such that, in a first adjustment range of the hydraulic cylinders (114) and until abutment means (124) between the rocking members (115) and the associated reel supporting members (8) become operative, the respective reel adjustment members (111) are adjustable relative to the corresponding reel support members (8) and, in a further adjustment range of the hydraulic cylinders (114) with said abutment means (124) in operation, the reel supporting members (8) are adjustable relative to the header frame (2).

11. A header according to claim 10 and further also comprising a header auger (3) positioned at a location rearwardly of the cutterbar (1); said header being characterized in that the abutment means (124) are disposed so that :
    - as the hydraulic cylinders (114) pass from the first to the further adjustment ranges and the abutment means (124) thus become operative, the reel adjustment members (111) are positioned at their rearwardmost positions relative to the reel support members (8) whereby the non-circular locus (63) of the free ends of the crop-engaging members (6,7) extends in the immediate vicinity of both the cutterbar (1) and the forward edge of the header auger (3); and
    - as the hydraulic cylinders (114) are adjusted within the further adjustment range, the non-circular locus (63) of the free ends of the crop-engaging members (6, 7) is raised, respectively lowered generally in the vertical direction relative to the cutterbar (1) and in front of the header auger (3).

12. A header according to claim 11 characterized in that stop means (125) are provided between the reel supporting members (8) and the header frame (2) for limiting downward movement of said reel supporting members (8) relative to the cutterbar (1); said stop means (125) becoming operative when said abutment means (124) become inoperative and vice versa, and the arrangement being such that, when the stop means (125) are operative and the hydraulic cylinders (114) are adjusted in their first adjustment range, the non-circular locus (63) is displaced both in the general fore-and-aft direction and angularly relative to the cutterbar (1).

**13.** A header according to any of the preceding claims characterized in that the inclination control means (86) including the steering means (87) and the further drive means (34) associated with the steering means (87) equally are supported on the reel adjustment members (111) for adjustment in unison therewith and with the reel (4) relative to the cutterbar (1).

**14.** A header according to claim 13 characterized in that the further drive means (34) comprise a linkage mechanism incorporating a crank arm (46) which is drivingly coupled to the reel shaft (5) to be rotated thereby, and a link (35) connected between the crank arm (46) and the steering means (87) of the inclination control means (86); the arrangement being such that, in use, rotation of the reel (4) causes the crank arm (46) to rotate, which in turn reciprocates the link (35) and thus oscillates the steering means (87), and, for each revolution of the reel (4), the crank arm (46) completes n revolutions with n equaling either 2, 3, 4 or 5.

**Revendications**

**1.** Bec cueilleur pour une machine agricole, comportant :

- un bâti de bec cueilleur (2)
- une barre de coupe (1) fixée au bâti de bec cueilleur (2) et apte à opérer pour couper une récolte sur pied;
- un tambour rabatteur rotatif (4) pourvu d'un arbre transversal (5) qui définit son axe de rotation principal (83) et comprenant plusieurs organes (6, 7) venant en prise avec la récolte, montés sur lui mobiles en rotation autour d'axes supplémentaires (84) respectifs disposés autour de l'arbre principal (5);
- des premiers moyens d'entraînement (28) destinés à entraîner en rotation le tambour rabatteur (4) dans un sens (89) ;
- des moyens de commande d'inclinaison (86) comprenant des moyens de direction (87) et aptes à opérer pour, pendant une rotation du tambour rabatteur (4) dans ledit sens (89), faire tourner les organes (6, 7) venant en prise avec la récolte autour des axes supplémentaires (84) respectifs dans le sens opposé (90); la conception étant telle que si les moyens de direction (87) devaient être maintenus dans une position fixe, les organes (6, 7) venant en prise avec la récolte seraient maintenus dans une orientation fixe par rapport à l'horizontale, moyennant quoi, les extrémités libres des organes (6, 7) venant en prise avec la récolte définiraient un lieu géométrique de configuration circulaire (62, 162);

- des seconds moyens d'entraînement (34) associés aux moyens de direction (87) pour faire osciller lesdits moyens de direction (87) pendant une rotation du tambour rabatteur (4), afin qu'ainsi les organes (6, 7) venant en prise avec la récolte soient également amenés à osciller suivant un mouvement de va-et-vient autour de leurs axes de pivotement supplémentaires (84) respectifs sur le tambour rabatteur (4), et que le lieu géométrique (63) des extrémités libres desdits organes (6, 7) venant en prise avec la récolte dévie par rapport à ladite configuration circulaire (62, 162); et

- des organes de support de tambour rabatteur (8) s'étendant, d'une manière générale, longitudinalement prévus au niveau des extrémités opposées transversalement du tambour rabatteur pour supporter celui-ci sur le bec cueilleur; lesdits organes de support de tambour rabatteur (8) étant montés d'une manière ajustable sur le bâti de bec cueilleur (2) afin de permettre un ajustement, dans l'ensemble, vertical du tambour rabatteur (4) par rapport à la barre de coupe (1); et

caractérisé en ce que :

le tambour rabatteur (4) est monté sur les organes de support de tambour rabatteur (8) par l'intermédiaire d'organes d'ajustement de tambour rabatteur (111) qui, d'une part, sont ajustables par rapport aux organes de support de tambour rabatteur (8) dans la direction, dans l'ensemble, longitudinale, afin de permettre un ajustement du lieu géométrique non circulaire (63) des extrémités libres des organes (6, 7) venant en prise avec la récolte par rapport à la barre de coupe (1) dans ladite direction dans l'ensemble longitudinale, et qui, d'autre part, sont également ajustables angulairement par rapport auxdits organes de support de tambour rabatteur (8) autour d'un axe de pivotement (113) situé, d'une manière générale, au niveau ou à proximité de l'axe principal (83) du tambour rabatteur, afin de permettre en outre un ajustement angulaire dudit lieu géométrique non circulaire (63) par rapport à ladite barre de coupe (1).

**2.** Bec cueilleur selon la revendication 1, caractérisé en ce que les parties (112) des organes de support de tambour rabatteur (8) sur lesquelles les organes d'ajustement de tambour rabatteur (111) sont montés en vue d'un ajustement sensiblement longitudinal, sont inclinées vers le bas, lorsqu'on les considère dans la direction d'avancement fonctionnelle du bec cueilleur, pour qu'ainsi ledit lieu géométrique (63) des extrémités libres des organes (6, 7) venant en prise avec la récolte soit abaissé, respectivement relevé, par rapport à la barre de coupe (1), lorsque lesdits organes d'ajustement de tambour rabatteur (111) sont ajustés dans la direction orientée, d'une manière générale, vers l'avant, respectivement dans la direction orientée, d'une manière générale, vers l'arrière par rapport aux organes de support de tambour rabatteur (8).

**3.** Bec cueilleur selon la revendication 1 ou 2, caractérisé en ce que les organes d'ajustement de tambour rabatteur (111) sont ajustables dans la direction, dans l'ensemble, longitudinale par rapport aux organes de support de tambour rabatteur (8) dans une plage prédéterminée, la plage de ladite capacité d'ajustement angulaire supplémentaire s'étendant depuis un point situé, d'une manière générale, au niveau ou à proximité de l'extrémité avant de ladite plage de capacité d'ajustement, dans l'ensemble, longitudinale.

**4.** Bec cueilleur selon la revendication 1 ou 2, caractérisé en ce qu'il est prévu des moyens (114-121) pour effectuer simultanément lesdits ajustements sensiblement longitudinal et angulaire des organes d'ajustement de tambour rabatteur (111) de telle façon que, lorsque le lieu géométrique (63) des extrémités libres des organes (6, 7) venant en prise avec la récolte est déplacé par rapport à la barre de coupe (1) dans la direction, dans l'ensemble, longitudinale, la position angulaire dudit lieu géométrique (63) par rapport à ladite barre de coupe (1) est modifiée en même temps.

**5.** Bec cueilleur selon la revendication 4, caractérisé en ce que lesdits moyens (114-121) pour effectuer lesdits ajustements sensiblement longitudinal et angulaire combinés comportent :
- des moyens de guidage (117-121) destinés à guider chacun desdits organes d'ajustement de tambour rabatteur (111) le long d'une trajectoire prédéterminée par rapport à l'organe de support de tambour rabatteur (8) correspondant et déterminée par ledit ajustement sensiblement longitudinal et angulaire combiné; et
- des moyens de commande de position (114-116) associés d'une manière fonctionnelle auxdits organes d'ajustement de tambour rabatteur (111) pour effectuer un déplacement desdits organes (111) le long desdites trajectoires.

**6.** Bec cueilleur selon la revendication 5, caractérisé en ce que:
- chaque organe d'ajustement de tambour rabatteur (111) est formé par un élément allongé ayant, d'une manière générale, une configuration en forme de U inversé; et
- lesdits moyens de guidage (117-121) sont formés, d'une part, par des premiers organes de guidage coopérants (119-120) situés, d'une manière générale, au niveau ou à proximité de l'extrémité avant dudit organe d'ajustement de tambour rabatteur (111) pour supporter ladite extrémité avant de l'organe d'ajustement de tambour rabatteur (111) sur l'organe de support de tambour rabatteur (8) correspondant en vue d'un ajustement sensiblement dans le sens de la longueur de celui-ci, et, d'autre part, par des seconds organes de guidage coopérants (117, 118, 121) situés, d'une manière générale, au niveau ou à proximité de l'extrémité arrière dudit organe d'ajustement de tambour rabatteur (111) pour supporter ladite extrémité arrière de l'organe d'ajustement de tambour rabatteur (111) sur l'organe de support de tambour rabatteur (8) correspondant en vue d'un ajustement dans une direction située à un certain angle par rapport à ladite direction sensiblement longitudinale.

**7.** Bec cueilleur selon la revendication 6, caractérisé en ce que:
- les premiers organes de guidage coopérants (119-120) sont formés par un galet de support (119) monté mobile en rotation sur chacun des organes d'ajustement de tambour rabatteur (111) à l'intérieur de la configuration en forme de U inversé de celui-ci, et par une surface de roulement (120) définie sur l'organe de support de tambour rabatteur (8) correspondant et conçue pour que le galet de support (119) puisse rouler sur elle, et

- les seconds organes de guidage coopérants (117, 118, 121) sont formés par une fente allongée (117) définie dans une plaque (121) fixées à chacun des organes de support de tambour rabatteur (8) et par un galet de guidage (118) monté rotatif sur l'organe d'ajustement de tambour rabatteur (111) correspondant; chacune des fentes allongées (117) étant positionnée suivant un certain angle par rapport à la surface de roulement (120) correspondante et étant adaptée pour recevoir en elle le galet de guidage (118) correspondant, tandis que l'axe de chacun des galets de support (119) définit l'axe de pivotement (113) autour duquel l'organe de support de tambour rabatteur (111) correspondant peut en outre être ajusté angulairement.

8. Bec cueilleur selon la revendication 7, caractérisé en ce que le tambour rabatteur (4) est, au niveau de ses extrémités opposées transversalement, monté mobile en rotation sur les organes d'ajustement de tambour rabatteur (111) respectifs, à proximité des extrémités avant respectives de ces derniers et au voisinage des galets de support (119) respectifs prévus sur ceux-ci.

9. Bec cueilleur selon l'une quelconque des revendications 5 à 8, caractérisé en ce que les moyens de commande de position (114-116) comportent un vérin hydraulique (114) qui agit entre chacun des organes d'ajustement de tambour rabatteur (111) et l'organe de support de tambour rabatteur (8) associé.

10. Bec cueilleur selon l'une quelconque des revendications 5 à 8, caractérisé en ce que les moyens de commande de position (114, 116) comportent :
    - un organe oscillant (115) monté d'une manière pivotante au niveau d'un premier axe de pivotement (122) sur chacun des organes de support de tambour rabatteur (8);
    - une tringle (116) qui s'étend entre un second pivot (123) prévu sur chaque organe oscillant (115) et l'organe d'ajustement de tambour rabatteur (111) associé; et
    - un vérin hydraulique (114) qui s'étend entre le bâti de bec cueilleur (2) et un troisième pivot (126) prévu sur chacun des organes oscillants (115); la conception étant telle que, dans une première plage d'ajustement des vérins hydrauliques (114) et jusqu'à l'entrée en action de moyens formant butée (124) prévus entre les organes oscillants (115) et les organes de support de tambour rabatteur (8) associés, les organes d'ajustement de tambour rabatteur (111) respectifs sont ajustables par rapport aux organes de support de tambour rabatteur (8) correspondants et, dans une seconde plage d'ajustement des vérins hydrauliques (114), lesdits moyens formant butée (124) étant actifs, les organes de support de tambour rabatteur (8) sont ajustables par rapport au bâti de bec cueilleur (2).

11. Bec cueilleur selon la revendication 10 et comportant également une vis sans fin de bec cueilleur (3) positionnée au niveau d'un emplacement situé en arrière de la barre de coupe (1); ledit bec cueilleur étant caractérisé en ce que les moyens formant butée (124) sont disposés de telle façon que :
    - lorsque les vérins hydrauliques (114) passent de la première dans la seconde plage d'ajustement, et que les moyens formant butée (124) entrent ainsi en action, les organes d'ajustement de tambour rabatteur (111) sont positionnés au niveau de leurs positions extrêmes arrière par rapport aux organes de support de tambour rabatteur (8), pour qu'ainsi le lieu géométrique non circulaire (63) des extrémités libres des organes (6, 7) venant en prise avec la récolte s'étende au voisinage immédiat tant de la barre de coupe (1) que du bord avant de la vis sans fin de bec cueilleur (3); et
    - lorsque les vérins hydrauliques (114) sont ajustés à l'intérieur de la seconde plage d'ajustement, le lieu géométrique non circulaire (63) des extrémités libres des organes (6, 7) venant en prise avec la récolte, est relevé, respectivement abaissé, d'une manière générale dans la direction verticale par rapport à la barre de coupe (1) et devant la vis sans fin de bec cueilleur (3)

12. Bec cueilleur selon la revendication 11, caractérisé en ce que des moyens d'arrêt (125) sont prévus entre les organes de support de tambour rabatteur (8) et le bâti de bec cueilleur (2) pour limiter un déplacement vers le bas desdits organes de support de tambour rabatteur (8) par rapport à la barre de coupe (1); lesdits moyens d'arrêt (125) entrant en action lorsque lesdits moyens formant butée (124) deviennent inactifs et vice versa, et la conception étant telle que, lorsque les moyens d'arrêt (125) sont actifs et que les vérins hydrauliques (114) sont ajustés dans leur première plage d'ajustement, le lieu géométrique non circulaire (63) est déplacé à la fois dans la direction sensiblement longitudinale et angulairement par rapport à la barre de coupe (1).

13. Bec cueilleur selon l'une quelconque des revendications précédentes, caractérisé en ce que les moyens de commande d'inclinaison (86) comportant les moyens de direction (87), et les seconds moyens d'entraînement (34) associés aux moyens de direction (87) sont eux aussi supportés sur les organes d'ajustement de tambour rabatteur (111) en vue d'un ajustement en synchronisme avec ceux-ci et avec le tambour rabatteur (4) par rapport à la barre de coupe (1).

14. Bec cueilleur selon la revendication 13, caractérisé en ce que les seconds moyens d'entraînement (34) comportent un mécanisme de tringlerie comportant un bras de manivelle (46) accouplé dans une relation d'entraînement avec l'arbre de tambour rabatteur (5) pour être entraîné en rotation par celui-ci, et une tringle (35) montée entre le bras de manivelle (46) et les moyens de direction (87) des moyens de commande d'inclinaison (86); la conception étant telle qu'en service, une rotation du tambour rabatteur (4) entraîne une rotation du bras de manivelle (46) qui lui-même provoque un mouvement de va-et-vient de la tringle (35) pour, par conséquent, faire osciller les moyens de direction (87) et, qu'à chaque tour du tambour rabatteur (4), le bras de manivelle (46) effectue n tours, n étant égal à 2, 3, 4 ou 5.

**Patentansprüche**

1. Mähvorrichtung für eine landwirtschaftliche Maschine mit:
   - einem Mähvorrichtungs-Rahmen (2),
   - einem an dem Mähvorrichtungs-Rahmen (2) befestigten Mähbalken (1) zum Mähen stehenden Erntematerials,
   - einer drehbaren Haspel (4), die eine deren Haupt-Drehachse (83) definierende querverlaufende Welle aufweist und die eine Mehrzahl von mit dem Erntematerial in Eingriff kommenden Teilen (6, 7) einschließt, die auf der Haspel um jeweilige weitere Achsen (84) drehbar befestigt sind, die um die Hauptwelle (5) herum angeordnet sind,

   - ersten Antriebseinrichtungen (28) zum Drehantrieb der Haspel (4) in einer Richtung (89),
   - Neigungssteuereinrichtungen (86), die Lenkereinrichtungen (87) einschließen und während der Drehung der Haspel (4) in der genannten einen Richtung (89) betreibbar sind, um die mit dem Erntematerial in Eingriff kommenden Teile (6, 7) um die jeweiligen weiteren Achsen (84) in der entgegengesetzten Richtung (90) zu drehen, wobei die Anordnung derart ist, daß wenn die Lenkereinrichtungen (87) in einer festen Position gehalten würden, die mit dem Erntematerial in Eingriff kommenden Teile (6, 7) in einer festen Ausrichtung gegenüber der Horizontalen gehalten würden, wodurch die freien Enden der mit dem Erntematerial in Eingriff kommenden Teile (6, 7) eine kreisförmige Ortskurve (62, 162) beschreiben würden,
   - weiteren Antriebseinrichtungen (34), die den Lenkereinrichtungen (87) zugeordnet sind, um die Lenkereinrichtungen (87) während der Drehung der Haspel (4) in Schwingungen zu versetzen, wodurch die mit dem Erntematerial in Eingriff kommenden Teile (6, 7) in gleicher Weise um ihre jeweiligen weiteren Schwenkachsen, (84) auf der Haspel (4) zurück und vorwärts in Schwingungen versetzt werden und die Ortskurve (63) der freien Enden der mit dem Erntematerial in Eingriff kommenden Teile (6, 7) von der Kreisform (62, 162) abweicht, und
   - allgemein sich in Vorwärts-Rückwärtsrichtung erstrekkenden Haspel-Tragteilen (8) an den in Querrichtung gegenüberliegenden Enden der Haspel (4) zur Halterung der Haspel (4) auf der Mähvorrichtung, wobei die Haspel-Tragteile (8) einstellbar auf dem Mähvorrichtungs-Rahmen (2) derart befestigt sind, daß eine allgemein vertikale Einstellung der Haspel (4) gegenüber dem Mähbalken (1) ermöglicht wird,

dadurch **gekennzeichnet,** daß die Haspel auf den Haspel-Tragteilen (8) über Haspel-Einstellteile (111) befestigt ist, die einerseits gegenüber den Haspel-Tragteilen (8) in der allgemein in Vorwärts-Rückwärtsrichtung verlaufenden Richtung derart einstellbar sind, daß sie eine Einstellung der nicht kreisförmigen Ortskurve (63) der freien Enden der mit dem Erntematerial in Eingriff kommenden Teile (6, 7) gegenüber dem Mähbalken (1) in dieser allgemein in Vorwärts-Rückwärtsrichtung verlaufenden Richtung ermöglichen und andererseits winkelmäßig gegenüber den Haspel-Tragteilen (8) um eine Schwenkachse (113) allgemein an oder in der Nähe der Hauptachse (83) der Spindel einstellbar sind, um zusätzlich eine Winkeleinstellung der nicht kreisförmigen Ortskurve (63) gegenüber dem Mähbalken (1) zu ermöglichen.

2.  Mähvorrichtung nach Anspruch 1,
    dadurch **gekennzeichnet,** daß die Abschnitte (112) der Haspel-Tragteile (8), auf denen die Haspel-Einstellteile (111) für eine allgemein in Vorwärts-Rückwärtsrichtung verlaufende Einstellung befestigt sind, bei Betrachtung in der Richtung der nach vorne gerichteten Betriebsbewegung der Mähvorrichtung nach unten geneigt sind, wodurch die Ortskurve (63) der freien Enden der mit dem Erntematerial in Eingriff kommenden Teile (6, 7) gegenüber dem Mähbalken (1) abgesenkt bzw. angehoben wird, wenn die Haspel-Einstellteile (111) in der allgemein nach vorne gerichteten Richtung bzw. in der allgemein nach hinten gerichteten Richtung gegenüber den Haspel-Tragteilen (8) eingestellt werden.

3.  Mähvorrichtung nach Anspruch 1 oder 2,
    dadurch **gekennzeichnet,** daß die Haspel-Einstellteile (111) in der allgemein in Vorwärts-Rückwärtsrichtung verlaufenden Richtung gegenüber den Haspel-Tragteilen (8) über einen vorgegebenen Bereich einstellbar sind, wobei sich der Bereich der zusätzlichen Winkeleinstellbarkeit von einem Punkt allgemein an oder in der Nähe des vorderen Endes des Bereiches der allgemein in Vorwärts-Rückwärtsrichtung verlaufenden Einstellbarkeit erstreckt.

4.  Mähvorrichtung nach Anspruch 1 oder 2,
    dadurch **gekennzeichnet,** daß Einrichtungen zur gleichzeitigen Durchführung der allgemein in Vorwärts-Rückwärtsrichtung verlaufenden Einstellungen und der Winkeleinstellungen der Haspel-Einstellteile (111) derart vorgesehen sind, daß wenn die Ortskurve (63) der freien Enden der mit dem Erntematerial in Eingriff kommenden Teile (6, 7) gegenüber dem Mähbalken (1) in der sich allgemein in Vorwärts-Rückwärtsrichtung erstreckenden Richtung verschoben wird, die Winkelposition der Ortskurve (63) gegenüber dem Mähbalken (1) gleichzeitig verändert wird.

5.  Mähvorrichtung nach Anspruch 4,
    dadurch **gekennzeichnet,** daß die Einrichtungen (114-121), die die kombinierten sich allgemein in Vorwärts-Rückwärtsr-

ichtungerstreckenden Einstellungen und Winkeleinstellungen bewirken, folgende Teile umfassen:

- Führungseinrichtungen (117-121) zum Führen jedes Haspel-Einstellteils (111) entlang einer vorgegebenen Bahn gegenüber dem entsprechenden Haspel-Tragteil (8), die durch die kombinierte, sich allgemein in Vorwärts-Rückwärtsrichtung und in Winkelrichtung erstreckende Einstellung bestimmt ist, und
- Positionssteuereinrichtungen (114, 116), die betriebsmäßig den Haspel-Einstellteilen (111) zugeordnet sind, um eine Bewegung der Haspel-Einstellteile (111) entlang der Bahnen zu bewirken.

6.  Mähvorrichtung nach Anspruch 5,
    dadurch **gekennzeichnet,** daß:
- jedes Haspel-Einstellteil (111) durch ein langgestrecktes Element mit allgemein umgekehrt U-förmiger Gestalt gebildet ist, und
- die Führungseinrichtungen (117-121) einerseits durch erste zusammenwirkende Führungsteile (119-120) allgemein am oder benachbart zum vorderen Ende des Haspel-Einstellteils (111) zur Halterung des vorderen Endes des Haspel-Einstellteils (111) auf dem entsprechenden Haspel-Tragteil (8) für eine Einstellung allgemein in dessen Längsrichtung und andererseits durch weitere zusammenwirkende Führungsteile (117, 118, 121) allgemein am oder benachbart zum hinteren Ende des Haspel-Einstellteils (111) zur Halterung des hinteren Endes des Haspel-Einstellteils (111) auf dem entsprechenden Haspel-Tragteil (8) für eine Einstellung in einer Richtung unter einem Winkel gegenüber der allgemein längsverlaufenden Richtung gebildet sind.

7.  Mähvorrichtung nach Anspruch 6,
    dadurch **gekennzeichnet,** daß:
- die ersten zusammenwirkenden Führungsteile (119-120) durch eine Stützrolle (119), die drehbar auf jedem Haspel-Einstellteil (111) innerhalb dessen umgekehrt U-förmiger Gestalt gehaltert ist, und eine Rollenoberfläche (120) auf dem entsprechenden Haspel-Tragteil (8) gebildet sind, die so angeordnet ist, daß die Stützrolle (119) auf dieser Rollenoberfläche abrollen kann, und
- die weiteren zusammenwirkenden Führungsteile (117, 118, 121) durch einen langgestreckten Schlitz (117) in einer an jedem Haspel-Tragteil (8) befestigten Platte (121) und eine Führungsrolle (118) gebildet sind, die drehbar auf dem entsprechenden Haspel-Einstellteil (111) befestigt ist, wobei jeder langgestreckte Schlitz (117) unter einem Winkel gegenüber der entsprechenden Rollenoberfläche (120) angeordnet und derart ausgebildet ist, daß er die entsprechende Führungsrolle (118) aufnimmt, und wobei die Achse jeder Stützrolle (119) die Schwenkachse (113) bildet, um die das entsprechende Haspel-Tragteil (111) zusätzlich winkelmäßig einstellbar ist.

8. Mähvorrichtung nach Anspruch 7, dadurch **gekennzeichnet,** daß die Haspel (4) drehbar an ihren in Querrichtung gegenüberliegenden Enden auf den jeweiligen Haspel-Einstellteilen (111) benachbart zu deren jeweiligen vorderen Enden und in der Nähe der jeweiligen Stützrollen (119) befestigt ist, die auf diesen vorgesehen sind.

9. Mähvorrichtung nach einem der Ansprüche 5 bis 8, dadurch **gekennzeichnet,** daß die Positionssteuereinrichtungen (114-116) einen Hydraulikzylinder (114) umfassen, der zwischen jedem Haspel-Einstellteil (111) und dem zugehörigen Haspel-Tragteil (8) wirkt.

10. Mähvorrichtung nach einem der Ansprüche 5 bis 8, dadurch **gekennzeichnet,** daß die Positionssteuereinrichtungen (114-116) folgende Teile umfassen:
    - ein Schwenkteil (115), das schwenkbar an einer ersten Schwenkachse (122) auf jedem Haspel-Tragteil (8) befestigt ist,
    - ein Gestänge (116), das sich zwischen einem zweiten Schwenkpunkt (123) auf jedem Schwenkteil (115) und dem zugehörigen Haspel-Einstellteil (111) erstreckt, und
    - einen Hydraulikzylinder (114), der sich zwischen dem Mähvorrichtungs-Rahmen (2) und einem dritten Schwenkpunkt (126) auf jedem Schwenkteil (115) erstreckt, wobei die Anordnung derart ist, daß über einen ersten Einstellbereich der Hydraulikzylinder (114) und bis zum Wirksamwerden von Anschlageinrichtungen (124) zwischen den Schwenkteilen (115) und den zugehörigen Haspel-Tragteilen (8) die jeweiligen Haspel-Einstellteile (111) gegenüber den entsprechenden Haspel-Tragteilen (8) einstellbar sind, und über einen weiteren Einstellbereich der Hydraulikzylinder (114) bei wirksamen Anschlageinrichtungen (124) die Haspel-Tragteile (8) gegenüber dem Mähvorrichtungs-Rahmen (2) einstellbar sind.

11. Mähvorrichtung nach Anspruch 10, die weiterhin eine Mähvorrichtungs-Förderschnecke (3) umfaßt, die an einer Stelle hinter dem Mähbalken (1) angeordnet ist, wobei die Mähvorrichtung dadurch **gekennzeichnet** ist, daß die Anschlageinrichtungen (124) derart angeordnet sind, daß:
    - wenn die Hydraulikzylinder (114) von den ersten zu den weiteren Einstellbereichen übergehen und die Anschlagteile (124) damit wirksam werden, die Haspel-Einstellteile (111) an ihren hintersten Stellungen gegenüber den Haspel-Tragteilen (8) angeordnet sind, so daß die nicht kreisförmige Ortskurve (63) der freien Enden der mit dem Erntematerial in Eingriff kommenden Teile (6, 7) sich in der unmittelbaren Nähe sowohl des Mähbalkens (1) als auch der Vorderkante der Mähvorrichtungs-Förderschnecke (3) erstreckt, und
    - wenn die Hydraulikzylinder (114) innerhalb des weiteren Einstellbereichs eingestellt werden, die nicht kreisförmige Ortskurve (63) der freien Enden der mit dem Erntematerial in Eingriff kommenden Teile (6, 7) allgemein in der vertikalen Richtung gegenüber dem Mähbalken (1) und vor der Mähvorrichtungs-Förderschnecke(3) angehoben bzw. abgesenkt wird.

12. Mähvorrichtung nach Anspruch 11, dadurch **gekennzeichnet,** daß Begrenzungseinrichtungen (125) zwischen den Haspel-Tragteilen (8) und dem Mähvorichtungs-Rahmen (2) vorgesehen sind, um die nach unten gerichtete Bewegung der Haspel-Tragteile (8) gegenüber dem Mähbalken (1) zu begrenzen, daß die Begrenzungseinrichtungen (125) wirksam werden, wenn die Anschlageinrichtungen (124) unwirksam werden, und umgekehrt, und daß die Anordnung derart ist, daß wenn die Begrenzungseinrichtungen (125) wirksam sind und die Hydraulikzylinder (114) über ihren ersten Einstellbereich eingestellt werden, die nicht kreisförmige Ortskurve (63) sowohl in der allgemein sich in Vorwärts-Rückwärtsrichtung erstreckenden Richtung als auch winkelmäßig gegenüber dem Mähbalken (1) verschoben wird.

**13.** Mähvorrichtung nach einem der vorhergehenden Ansprüche,
dadurch **gekennzeichnet,** daß die die Lenkereinrichtungen (87) und die den Lenkereinrichtungen (87) zugeordneten weiteren Antriebseinrichtungen (34) einschließenden Neigungssteuereinrichtungen (86) in gleicher Weise auf den Haspel-Einstellteilen (111) für eine Einstellung zusammen mit diesen und mit der Haspel (4) gegenüber dem Mähbalken (1) gehaltert sind.

**14.** Mähvorrichtung nach Anspruch 13,
dadurch **gekennzeichnet,** daß die weiteren Antriebseinrichtungen (34) einen Gestängemechanismus, der einen antriebsmäßig mit der Haspel-Welle (5) für eine Drehung durch diese gekoppelten Kurbelarm (46) und ein Gestänge (35) enthält, das zwischen dem Kurbelarm (46) und den Lenkereinrichtungen (87) der Neigungssteuereinrichtungen (86) angeschlossen ist, wobei die Anordnung derart ist, daß im Betrieb eine Drehung der Haspel (4) eine Drehung des Kurbelarms (46) hervorruft, der seinerseits das Gestänge (35) hin- und herbewegt und damit die Lenkereinrichtungen (87) in Schwingungen versetzt, wobei für jede Umdrehung der Haspel (4) der Kurbelarm (46) n Umdrehungen ausführt, wobei n entweder gleich 2, 3, 4 oder 5 ist.

FIG.1

EP 0 280 792 B1

FIG.2

23

FIG. 4

FIG. 3

FIG.5

**FIG.6**

FIG. 7

FIG.8

**FIG.9**

EP 0 280 792 B1

**FIG.10**

EP 0 280 792 B1